(19) Europäisches Patentamt
European Patent Office
Office européen des brevets

(11) Veröffentlichungsnummer: **0 467 083 A2**

(12) **EUROPÄISCHE PATENTANMELDUNG**

(21) Anmeldenummer: **91110028.7**

(22) Anmeldetag: **19.06.91**

(51) Int. Cl.[5]: **C08G 18/38**, C08G 18/61, D06M 15/576, D06M 15/657

(30) Priorität: **14.07.90 DE 4022443**
**15.12.90 DE 4040166**

(43) Veröffentlichungstag der Anmeldung: **22.01.92 Patentblatt 92/04**

(84) Benannte Vertragsstaaten: **AT BE CH DE ES FR GB IT LI NL**

(71) Anmelder: **Pfersee Chemie GmbH**
**Rehlinger Str. 1 Postfach 1153**
**W-8901 Langweid am Lech(DE)**

(72) Erfinder: **Lüdemann, Simpert**
**Birkenweg 1**
**W-8903 Bobingen(DE)**
Erfinder: **Bernheim, Michael, Dr.**
**Sonnenweg 3**
**W-8901 Aystetten(DE)**
Erfinder: **Rössler, Erich**
**Parkstrasse 13**
**W-8901 Stadtbergen-Leitershofen(DE)**
Erfinder: **Mosch, Franz**
**Lettenbachstrasse 31**
**W 8901 Diedorf(DE)**

(54) **Perfluoraliphatische Gruppen enthaltende Copolymere mit Urethan- und Siloxaneinheiten.**

(57) Es werden perfluoraliphatische Gruppen enthaltende Copolymere mit Urethan- und Siloxaneinheiten beschrieben. Diese lassen sich erhalten durch Umsetzung von speziellen, mindestens zwei Perfluoralkylreste enthaltenden Diolen mit Di- oder Polyisocyanaten zu Oligo- oder Polyurethanen, welche noch freie Hydroxylgruppen oder Isocyanatgruppen aufweisen, und nachfolgende Umsetzung dieser Urethane mit Polysiloxanen, welche mindestens zwei funktionelle Gruppen enthalten. Die so erhältlichen Copolymeren eignen sich sehr gut zur öl- und wasserabweisenden Ausrüstung von Fasermaterialien, denen sie zusätzlich angenehm weichen Griff verleihen.

EP 0 467 083 A2

Die Erfindung betrifft perfluoraliphatische Gruppen enthaltende Copolymere mit Urethan- und Siloxaneinheiten, welche erhalten werden können durch Umsetzung bestimmter Diole, die perfluoraliphatische Gruppen enthalten, mit Di- oder Polyisocyanaten zu Oligo- oder Polyurethanen, die noch freie Hydroxylgruppen oder freie isocyanatgruppen aufweisen, und Umsetzung dieser Oligo- oder Polyurethane mit Polysiloxanen, welche mindestens zwei funktionelle Gruppen enthalten, die mit Hydroxyl- oder Isocyanatgruppen reagieren können. Sie betrifft ferner ein Verfahren zur Herstellung dieser Copolymeren, wäßrige Dispersionen, welche diese Copolymeren enthalten und die Verwendung solcher wäßriger Dispersionen zur Behandlung von Fasermaterialien.

Es ist bekannt, Fasermaterialien mit wäßrigen Dispersionen zu behandeln, welche Verbindungen mit perfluorierten Resten enthalten. Durch Behandlung mit geeigneten fluorhaltigen Substanzen werden dem Fasermaterial, z.B. einem textilen Flächengebilde, öl- und wasserabweisende Eigenschaften verliehen. So beschreibt beispielsweise die EP-A 0 348 350 Perfluoralkylgruppen enthaltende Produkte, z.B. Polyester oder Polyurethane, welche für die öl- und wasserabweisende Ausrüstung von Textilien verwendet werden können. So geeignet diese auch für die Erzielung öl- und wasserabweisender Eigenschaften sind, besitzen sie den Nachteil, daß ein voll befriedigend weicher Griff von Textilien mit ihnen nicht erhalten wird.
Es ist außerdem bekannt, daß durch Ausrüstung mit Polysiloxanen Textilien ein angenehm weicher Griff, der sogenannte Silikongriff, vermittelt werden kann. Versuche, Fasermaterialien sowohl gute öl- und wasserabweisende Eigenschaften als auch einen angenehm weichen Griff dadurch zu vermitteln, daß man sie mit einer Mischung von fluorhaltigen Verbindungen und Polysiloxanen behandelte, führten nicht zum gewünschten Erfolg. Es zeigte sich nämlich, daß durch den Zusatz von Siloxanen die öl- und wasserabweisende Wirkung, die mit den betreffenden fluorhaltigen Verbindungen für sich allein erzielt werden konnte, verschlechtert wurde, z.T. sogar in wesentlichem Ausmaß. Es wurde aus den genannten Gründen bereits versucht, die günstigen Eigenschaften von fluorhaltigen Verbindungen mit denen von Polysiloxanen auf andere Art und Weise zu kombinieren. Die EP-A 0 325 918 beschreibt polymere Produkte, welche durch Umsetzung von perfluoraliphatische Gruppen enthaltenden Oligo- oder Polyurethanen mit funktionellen Polysiloxanen erhalten werden. Diese Produkte weisen den Vorteil auf, daß die mit ihnen ausgerüsteten Textilien nicht nur gute öl- und wasserabweisende Eigenschaften besitzen, sondern auch einen angenehm weichen Griff. Gegenüber den in dieser Schrift ausdrücklich genannten Beispielen für solche Produkte wäre es jedoch aus Kostengründen noch wünschenswert, mit einem geringeren Gehalt an Fluor auf den ausgerüsteten Textilien auszukommen.

Der vorliegenden Erfindung lag daher die Aufgabe zugrunde, Produkte für die effektive öl- und wasserabweisende Ausrüstung von Fasermaterialien zur Verfügung zu stellen, welche den Fasermaterialien außerdem einen angenehm weichen Griff verleihen und mit welchen bei geringerem Gehalt an Fluor auf den Fasermaterialien gleiche oder bessere Effekte erzielt werden können als mit bekannten Produkten. Weiterhin bestand die Aufgabe darin, ein besonders günstiges Verfahren zur Herstellung dieser Produkte zu entwickeln.
Die Aufgabe wurde gelöst durch perfluoraliphatische Gruppen enthaltende Copolymere mit Urethan- und Siloxaneinheiten, herstellbar durch folgende Verfahrensschritte

a) Umsetzung eines Diols der allgemeinen Formel I

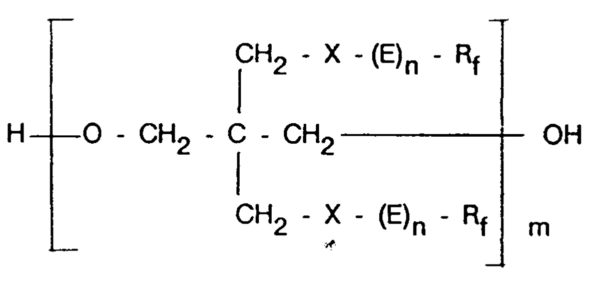

(I)

worin
m = 1, 2 oder 3 ist
n = 0 oder 1 ist
die Einheit $-CH_2-X-$ für $CH_2-S-$, $-CH_2-N(R)-SO_2-$ oder für $-CH_2-N(R)-C(O)-$steht,
worin R für Wasserstoff oder für eine Alkylgruppe mit 1 - 6 C-Atomen steht $R_f$ für einen geradkettigen oder verzweigten Perfluoralkylrest mit 1 bis 18 C-Atomen steht, in dem ggf. ein Fluoratom durch eine Perfluoralkoxygruppe mit 2 bis 6 C-Atomen substituiert sein kann,
worin E ein verzweigter oder geradkettiger Alkylenrest mit 1 bis 10 Kohlenstoffatomen ist, der gegebenenfalls durch 1 bis 3 Gruppen unterbrochen ist, nämlich durch jeweils zweiwertige Brückenglieder der Formeln -NR-,-O-,-S-,-$SO_2$-,-COO-,-OOC-,-CONR-,-NRCO-,-$SO_2$NR- und -NR$SO_2$-, und der gegebenenfalls an einem Ende eine -$SO_2$NR- oder eine -CONR-Gruppe aufweist, wobei der Rest $R_f$ mit dem Schwefelatom oder dem Kohlenstoffatom dieser Gruppe verknüpft ist, wobei R für Wasserstoff oder eine Alkylgruppe mit 1-6 C-Atomen steht,
wobei das Diol im Gemisch mit Nebenprodukten vorliegen kann, die bei seiner Herstellung anfallen,
mit einem Di- oder Polyisocyanat zu einem Oligo- oder Polyurethan, welches freie Hydroxylgruppen oder freie Isocyanatgruppen aufweist, wobei diese Umsetzung gegebenenfalls in Anwesenheit eines mindestens 2 Hydroxylgruppen enthaltenden Kettenverlängerungsmittels durchgeführt wird,
b) Umsetzung eines durch Schritt a) erhältlichen Oligo- oder Polyurethans mit einem Polysiloxan, welches mindestens zwei funktionelle Gruppen enthält, die mit den freien Hydroxylgruppen oder freien Isocyanatgruppen des Oligo- oder Polyurethans reagieren können.

Es wurde überraschenderweise gefunden, daß zur Erzielung gleich guter Effekte bei Verwendung dieser erfindungsgemäßen Copolymeren entweder die Auflage auf dem Fasermaterial reduziert werden kann im Vergleich zu bekannten Produkten, z.B. denen der EP-A 0 325 918, oder daß bei gleichen Auflagemengen die Perfluoralkylreste kürzer sein können. In beiden Fällen ergibt sich somit die Möglichkeit einer Reduzierung des Fluorgehalts auf dem Fasermaterial und damit eine Kostenersparnis.
Die erfindungsgemäßen Copolymeren lassen sich, ggf. mittels eines geeigneten Dispergators, nach üblichen Methoden in stabile wäßrige Dispersionen-überführen. Die so erhaltenen Dispersionen können nach ebenfalls bekannten Methoden, z.B. mittels eines Foulardverfahrens, auf Fasermaterialien wie Textilien aufgebracht werden.

Die erfindungsgemäßen Copolymeren lassen sich durch das nachfolgend im einzelnen beschriebene Verfahren erhalten.

Ein Diol der oben und in Patentanspruch 1 (Formel I) bezeichneten Art wird in einem ersten Schritt a) mit einem Di- oder Polyisocyanat zu einem Oligo- oder Polyurethan umgesetzt. Dieses Oligo- oder Polyurethan muß noch freie Hydroxylgruppen oder freie Isocyanatgruppen aufweisen. Dies bedeutet, daß die einzusetzenden Mengen an Diol und an Di- oder Polyisocyanat so bemessen werden müssen, daß entweder ein zahlenmäßiger Überschuß oder ein zahlenmäßiger Unterschuß an Isocyanatgruppen gegenüber den OH-Gruppen des Diols anwesend ist.

Beispiele für geeignete Diole und Verfahren zu ihrer Herstellung gehen aus der EP-A 0 348 350 hervor. Gemäß der oben aufgeführten allgemeinen Formel I für die Diole kann ein ggf. gemäß obigen Angaben substituierter Alkylenrest E in den Diolen enthalten sein. Dies ist bevorzugt dann der Fall, wenn in obengenannter Formel X für Schwefel steht. Steht X dagegen für die -$SO_2$NR- oder -CONR-Gruppierung, so ist vorzugsweise der Alkylenrest E nicht anwesend, d.h. in diesem Fall besitzt n in der allgemeinen Formel I vorzugsweise den Wert Null. Ist ein Alkylenrest E vorhanden, so enthält er in einer bevorzugten Ausführungsform 2 C-Atome, stellt also eine Ethylengruppe dar. Wenn X für eine -CON(R)- oder eine -$SO_2$NR-Gruppe steht, so ist nicht das Stickstoffatom des betreffenden Rests mit E (wenn n = 1 ist) bzw. mit dem Rest $R_f$ (wenn n = 0 ist) verbunden, sondern das Kohlenstoff- bzw. Schwefelatom.
Die Angabe im Patentanspruch 1, wonach E unter anderem durch
-COO- oder -OOC-
bzw. -CONR- oder -NRCO-
bzw. -$SO_2$NR- oder -NR$SO_2$-
unterbrochen sein kann, bedeutet, daß es sich bei diesen drei Paaren zwar um jeweils untereinander gleiche zweiwertige Reste handelt, daß aber dem Rest $R_f$ wahlweise das eine oder das andere Ende des betreffenden Restes zugewandt sein kann.
Für die Behandlung von Fasermaterialien besonders geeignete erfindungsgemäße Copolymere werden erhalten, wenn als Ausgangsdiol eine Verbindung der Formel V

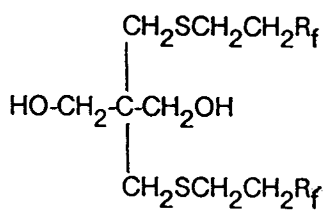

(V)

verwendet wird. $R_f$ stellt hierbei einen fluorhaltigen Rest der obengenannten Art dar. Es ist vorteilhaft, wenn in den erfindungsgemäßen Copolymeren und in den zu ihrer Herstellung verwendeten Diolen der Rest $R_f$

überwiegend aus 8 bis 10 C-Atomen besteht. Bei der Herstellung der Diole fällt im Normalfall ein Gemisch von Produkten an, in denen eine bestimmte Verteilung der Kettenlängen des Restes $R_f$ vorliegt. Bevorzugt werden die Ausgangsverbindungen (Diole) bzw. die Bedingungen bei deren Herstellung so gewählt, daß ein Maximum der Kettenlängen für den Rest $R_f$ in den Diolen und damit auch in den erfindungsgemäßen Copolymeren im Bereich von 8 bis 10 C-Atomen liegt. Es ist günstig, wenn in 65 bis 90 % aller Moleküle des für die Herstellung der erfindungsgemäßen Copolymere verwendeten Diols und damit auch in 65 bis 90 % der Copolymermoleküle der Rest $R_f$ 8 bis 10 Kohlenstoffatome enthält. Außerdem ist der Rest $R_f$ vorzugsweise ein geradkettiger Perfluoralkylrest der Formel $C_nF_{n+1}$.

Das zur Herstellung der erfindungsgemäßen Copolymeren verwendete Diol muß nicht ein chemisch reines Produkt sein. Vielmehr kann es sich hierbei, wie oben bereits erwähnt, um ein Gemisch von Diolen handeln, welche sich in der Kettenlänge des Restes $R_f$ unterscheiden. Außerdem kann auch ein Gemisch von Produkten vorliegen, die alle unter die allgemeine Formel I von Patentanspruch 1 fallen und sich beispielsweise durch den Wert von m und/oder in der Kettenlänge des Alkylenrestes E unterscheiden.
Daneben kann das verwendete Diol bzw. Diolgemisch in Mischung mit Nebenprodukten (die nicht unter die Formel I von Patentanspruch 1 fallen) vorliegen, welche bei der Herstellung des Diols anfallen. Bei der Synthese von geeigneten Diolen, wie sie beispielsweise in der EP-A 0 348 350 beschrieben ist, kann von Bis-brommethyl-Verbindungen ausgegangen werden, die beispielsweise mit -SH- bzw. -CONHR- bzw. -$SO_2$NHR-Gruppen enthaltenden Verbindungen umgesetzt werden. Bei dieser Synthese fallen Nebenprodukte im Gemisch mit den gewünschten Diolen an. Diese Nebenprodukte müssen vor der Herstellung erfindungsgemäßer Copolymerer nicht entfernt werden, wodurch sich diese Herstellung kostengünstiger gestaltet. Allerdings sollte in Normalfall das zur Umsetzung mit Di- oder Polyisocyanat gemaß Schritt a) verwendete Diol bzw. Diolgemisch eine Reinheit von mindestens 75 Gew.% besitzen, d.h. der Gehalt an nicht unter Formel I fallenden Nebenprodukten sollte höchstens 25 Gew.% betragen.

Die zweite für Verfahrensschritt a) verwendete Ausgangssubstanz ist ein Di- oder Polyisocyanat, also eine Verbindung, welche zwei oder mehr -NCO-Gruppen im Molekül enthält. Wie im oben erläuterten Fall der Diole kann auch hierbei ein Gemisch, z.B. von mehreren Di- bzw. Polyisocyanaten eingesetzt werden. Beispiele für geeignete Di- oder Polyisocyanate sind in der EP-A 0 325 918 beschrieben. Dort sind auch geeignete Bedingungen für deren Umsetzung mit perfluoraliphatische Gruppen ($R_f$) enthaltenden Diolen angegeben. Weitere geeignete Di- und Polyisocyanate werden unten im Zusammenhang mit einem besonders bevorzugten Herstellungsverfahren beschrieben.
Für die Herstellung der erfindungsgemäßen Copolymeren ist es wesentlich, daß bei Verfahrensschritt a) Oligo- oder Polyurethane erhalten werden, welche noch freie Hydroxylgruppen oder freie Isocyanatgruppen aufweisen. Dies läßt sich erreichen, indem man das Di- oder Polyisocyanat in solchen Mengen verwendet, daß ein zahlenmäßiger Überschuß oder Unterschuß an -NCO-Gruppen gegenüber den Hydroxylgruppen des Diols vorliegt. Vorzugsweise bemißt man die Mengen so, daß das Mengenverhältnis von Diol zu Di- oder Polyisocyanat für die Umsetzung gemäß Verfahrensschritt a) so gewählt wird, daß das Verhältnis der Anzahl der OH-Gruppen des Diols zur Anzahl der -NCO-Gruppen des Isocyanats 2:3 bis 14:15 oder 15 14 bis 3:2 beträgt.

Der zweite Schritt (Schritt b)) des Verfahrens, durch das die erfindungsgemäßen Copolymeren erhalten werden können, besteht darin, das durch Schritt a) erhaltene Oligo- oder Polyurethan mit einem Polysiloxan umzusetzen. Das hierbei verwendete Polysiloxan muß dazu mindestens zwei funktionelle Gruppen enthalten, welche mit den freien Hydroxyl- bzw. den freien Isocyanatgruppen des Oligo- oder Polyurethans reagieren können. Für den Fall, daß das Oligo- oder Polyurethan freie Hydroxylgruppen enthält, sind im verwendeten Polysiloxan bevorzugt Epoxy- oder Carboxygruppen als funktionelle Gruppen anwesend. Die Carboxygruppen können hierbei z.B. als freie Carbonsäuren oder als Carbonsäureester vorliegen. Enthält das Oligo- oder Polyurethan dagegen freie Isocyanatgruppen, sind die funktionellen Gruppen des Polysiloxans bevorzugt Hydroxyl-, Amino-oder Amidogruppen. Die Amino- oder Amidogruppen weisen hierbei mindestens eine NH-Bindung auf, sind also primäre oder sekundäre Amino- bzw. Amidogruppen. Selbstverständlich können im erstgenannten Fall auch Polysiloxane eingesetzt werden, in denen die eine der funktionellen Gruppen eine Epoxy-, die andere eine Carboxygruppe ist, und im zweiten Fall Polysiloxane, bei denen ebenfalls eine der beiden funktionellen Gruppen von anderer Art ist als die andere. Daneben können die Polysiloxane auch noch weitere funktionelle Gruppen enthalten.
Eine Reihe von geeigneten Polysiloxanen ist in der EPA 0 325 918 beschrieben. Bevorzugt werden Polysiloxane der folgenden Formel eingesetzt

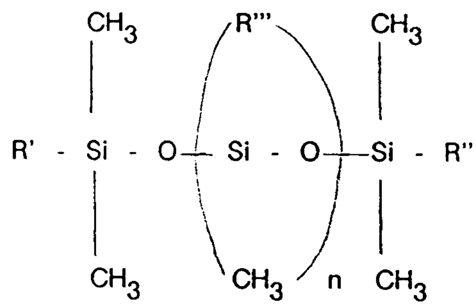

worin n = 5 - 200, vorzugsweise 8 bis 100, ist und worin durchschnittlich mindestens 2-aller anwesenden einzelnen Reste R', R''und R'''für einen Rest stehen, der eine funktionelle Gruppe enthält, die mit einer Hydroxyl- oder einer Isocyanatgruppe reagieren kann und worin alle Reste R', R'', R''', welche keine solche funktionelle Gruppe enthalten, jeweils für einen Methylrest stehen.

Die Aussage, wonach durchschnittlich mindestens 2 aller anwesenden einzelnen Reste R', R'' und R''' für einen Rest stehen, der eine funktionelle Gruppe enthält, die mit einer Hydroxyl- oder einer Isocyanatgruppe reagieren kann, bedeutet, daß entweder R' und R'' je eine funktionelle Gruppe der genannten Art enthalten müssen (dies gilt für den Fall, daß keiner der Reste R''' eine solche Gruppe enthält) oder daß einer dieser Reste R' und R'' und mindestens einer aller im Molekül anwesenden Reste R''' eine solche Gruppe enthalten müssen oder daß mindestens zwei aller anwesenden Reste R''' eine solche funktionelle Gruppe enthalten müssen, wenn weder R' noch R'' eine solche Gruppe enthalten; die übrigen der Reste R''' können von anderer Art sein.

Vorzugsweise verwendet man Polysiloxane, welche funktionelle Gruppen der genannten Art in $\alpha$-und in $\omega$-Stellung enthalten, bei denen also R' und R'' (siehe obige Formel) solche Gruppen enthalten. Weiterhin ist es bevorzugt, wenn alle im Polysiloxanmolekül anwesenden Reste R', R'' und R''', welche keine solche funktionelle Gruppe enthalten, Methylgruppen sind. Besonders geeignet sind lineare Polydimethylsiloxane, welche nur in $\alpha$- und in $\omega$-Stellung Reste mit solchen funktionellen Gruppen enthalten, bei denen also alle an Si gebundenen Reste R''' Methylgruppen sind. Besonders günstig zur Herstellung von erfindungsgemäßen Copolymeren sind Polysiloxane der oben angegebenen Formel, In denen R''' für $-CH_3$ und R' und R'' jeweils für die Gruppierung $-CH_2CH_2CH_2OH$ stehen; dies gilt für den Fall, daß das im Schritt a) hergestellte Oligo- oder Polyurethan freie Isocyanatgruppen aufweist. Auch in den Fällen, in denen die funktionellen Gruppen des Polysiloxans Epoxy-, Carboxy-, Amino- oder Amidogruppen sind, befindet sich zwischen der jeweiligen funktionellen Gruppe und dementsprechenden Si-Atom vorzugsweise ein Alkylenrest, vorzugsweise mit 1 bis 4 C-Atomen.

Es ist besonders vorteilhaft, wenn im Verfahrensschritt b) das Oligo- oder Polyurethan und das Polysiloxan in solchen Mengenverhältnissen miteinander umgesetzt werden, daß alle freien Hydroxylgrupen bzw. alle freien Isocyanatgruppen des Urethans umgesetzt werden. Geeignete Verfahrensbedingungen sind in der EP-A 0 325 918 genannt. Die entsprechenden (dort für den Fall von Oligo- oder Polyurethanen, welche aus anderen Diolen hergestellt werden, angegebenen) Verfahrensbedingungen sind auch für die Herstellung der erfindungsgemäßen Copolymeren geeignet. Es ist möglich, einen geringen zahlenmäßigen Überschuß an funktionellen Gruppen des Polysiloxans gegenüber den Hydroxyl-bzw. Isocyanatgruppen des Oligo- oder Polyurethans einzusetzen, z.B. um zu gewährleisten, daß alle OH- bzw. -NCO-Gruppen des Urethans bei kürzerer Reaktionszeit umgesetzt werden. Dieser Überschuß sollte jedoch 5% nicht überschreiten. Vorzugsweise verwendet man jedoch solche Mengen, daß die funktionellen Gruppen des Siloxans in äquivalenter Anzahl, bezogen auf die Hydroxyl- bzw. Isocyanatgruppen des Urethans, vorliegen.

Obwohl die Diole der Formel I, welche als Ausgangsverbindungen zur Herstellung der erfindungsgemäßen Copolymeren dienen, nach dem in der EP-A 0 348 350 beschriebenen Verfahren hergestellt werden können, besteht eine bevorzugte Ausführungsform darin, das Diol der Formel I nach einem verbesserten Verfahren herzustellen. Dieses verbesserte Verfahren wird unten näher erläutert und besitzt Vorteile gegenüber dem Verfahren der EP-A 0 348 350. Dort ist beschrieben, daß solche Diole herstellbar sind durch Umsetzung von Verbindungen der allgemeinen Formel I A

$R_f\text{-}(E)_n\text{-}X\text{-}H$ (I A)

mit mindestens 2 Halogenatome enthaltenden Diolen der allgemeinen Formel II A

$HO[CH_2C(CH_2Y)_2CH_2O]_m$-H (II A)

wobei Y = Br, Cl oder J ist und $R_f$, E, X m und n die obengenannte Bedeutung haben. Wie die EP-A 0 348 350 lehrt, wird diese Reaktion, soweit die Verbindungen I A ein hinreichend azides Wasserstoffatom aufweisen, unter wasserfreien Bedingungen in einem aprotischen Lösungsmittel bei erhöhter Temperatur in Gegenwart von festem Alkalicarbonat, insbesondere Kaliumcarbonat, durchgeführt und anschließend werden die entstandenen Diole isoliert. Ein gewisser Nachteil dieses Verfahrens ist ein relativ langer Zeitbedarf für die Herstellung des Diols und die Tatsache, daß festes Alkalihalogenid nach der Umsetzung aus der organischen Lösung entfernt werden muß, wobei sich Schwierigkeiten ergeben können.

Nachfolgend wird ein verbessertes Verfahren zur Herstellung von Diolen der Formel I beschrieben. Bevorzugt lassen sich erfindungsgemäße Copolymere ausgehend von Diolen erhalten, die nach diesem Verfahren hergestellt wurden. Das verbesserte Verfahren umfaßt folgende Schritte: Umsetzung einer Verbindung der allgemeinen Formel (II)

$R_f$-$(E)_n$-X-H (II)

mit einer Verbindung der allgemeinen Formel (III)

$$HO\ [CH_2-C\,(CH_2Y)_2CH_2O]_m-H \quad (III)$$

worin Y für Cl, Br oder J steht und wobei je Mol-Äquivalent Y von Verbindung (III) ca. 1 Mol der Verbindung (II) eingesetzt wird, und wobei $R_f$, E, X, m und n die in Patentanspruch 1 angegebene Bedeutung haben, wobei diese Umsetzung in Gegenwart einer wäßrigen Lösung eines Alkalicarbonats in einer Menge, die zur im wesentlichen vollständigen Neutralisation der entstehenden Säure HY ausreicht, in einem in Wasser im wesentlichen unlöslichen aprotischen organischen Lösungsmittel, gegebenenfalls eines Phasentransferkatalysators, durchgeführt wird und Abtrennung der sich abscheidenden wäßrigen Salzlösung und Entfernung des verbleibenden Restwassers aus der organischen Phase.

Vorzugsweise werden die nach diesem verbesserten Verfahren erhaltenen Diole ohne ihre vorhergehende Isolierung in einem Lösungsmittel mit dem Di- oder Polyisocyanat zum Oligo- oder Polyurethan umgesetzt. Nachfolgend wird ein besonders geeignetes Verfahren zur Herstellung erfindungsgemäßer Copolymerer beschrieben. Dieses Verfahren schließt das verbesserte Verfahren zur Herstellung von Diolen der Formel (I) ein, bei dem von Verbindungen der oben angegebenen Formeln (II) und (III) ausgegangen wird. Im Folgenden werden zuerst die für das verbesserte Verfahren zur Herstellung der Diole der Formel (I) eingesetzten Ausgangsverbindungen der Formeln (II) und (III) beschrieben, anschließend die für das bevorzugte Verfahren zur Herstellung erfindungsgemäßer Copolymerer eingesetzten Verbindungen der Formel (I) und die in Verfahrensschritt a) von Anspruch 1 eingesetzten Di- und Polyisocyanate. Im Anschluß daran erfolgt die detaillierte Beschreibung des verbesserten Verfahrens zur Herstellung der Diole der Formel (I).

Die Verbindungen der Formel (II):

Diese Verbindungen weisen einen einwertigen Rest $R_f$ auf. Der Rest $R_f$ ist ein geradkettiger oder verzweigter Perfluoralkylrest mit 1 bis 18 C-Atomen. Gegebenenfalls kann ein Fluoratom dieses Rests durch eine Perfluoralkoxygruppe mit 2 bis 6 C-Atomen substituiert sein. Die Verbindung der Formel (II) muß nicht eine einheitliche chemische Verbindung sein. Vielmehr liegt die Verbindung der Formel (II), die für das verbesserte Verfahren eingesetzt wird, im Normalfall als ein Gemisch von Verbindungen vor, die alle unter Formel (II) fallen und die sich durch die Kettenlänge des Restes $R_f$ unterscheiden. Gut geeignet für das Verfahren sind Gemische, in denen die Reste $R_f$ 6 bis 14 C-Atome aufweisen. Eine besonders bevorzugte Ausführungsform des Verfahrens besteht darin, daß als Verbindung der Formel (II) ein Gemisch solcher Verbindungen eingesetzt wird, in denen $R_f$ für einen geradkettigen Perfluoralkylrest der Formel $C_nF_{n+1}$ steht und wobei in 65 bis 90 % aller Moleküle der Verbindung (II) der Rest $R_f$ 8 bis 10 Kohlenstoffatome enthält. Diese Kettenlängenverteilung bleibt im Lauf des Verfahrens erhalten, so daß auch in den Diolen der Formel I und in den als Endprodukte erhaltenen Copolymeren 65 bis 90 % aller Reste $R_f$ 8 bis 10 Kohlenstoffatome enthalten. Es hat sich gezeigt, daß Copolymere mit dieser Eigenschaft besonders günstige Ausrüstungsmittel für Fasermaterialien wie z.B. Textilien darstellen.

In den Verbindungen der Formeln (II) und (III) besitzen $R_f$, E, X, m und n die gleiche Bedeutung wie oben und in Anspruch 1 angegeben. Die zur Durchführung des verbesserten Verfahrens verwendete

Verbindung (II) muß nicht ein chemisch reines Produkt sein. Vielmehr kann es sich hierbei, wie oben bereits erwähnt, um ein Gemisch von Verbindungen handeln, welche sich in der Kettenlänge des Restes $R_f$ unterscheiden. Außerdem kann auch ein Gemisch von Produkten vorliegen, die alle unter die allgemeine Formel II fallen und sich beispielsweise in der Kettenlänge des Alkylenrestes E unterscheiden.
Beispiele für Verbindungen der Formel (II), die sich für das verbesserte Verfahren eignen, gehen aus der EP-A 0 348 350 hervor.
Besonders vorteilhaft ist es, das verbesserte Verfahren so durchzuführen, daß Verbindungen der Formel (II) eingesetzt werden, in denen E = $-CH_2H_2-$, n = 1 und X = -S- ist und daß Verbindungen der Formel (III) eingesetzt werden,in denen m = 1 ist. In diesem Fall weisen die erhaltenen Diole der Formel (I) folgende Struktur auf:

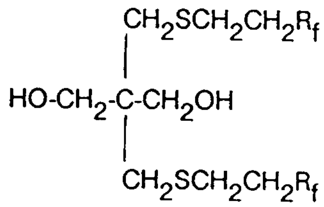

$R_f$ stellt hierbei einen fluorhaltigen Rest der obengenannten Art dar.
Es hat sich gezeigt, daß Copolymere, die ausgehend von diesen Diolen nach Umsetzung mit Isocyanaten und Polysiloxanen gemäß den nachfolgenden Verfahrensschritten erhalten werden, besonders günstig für die Ausrüstung von Textilmaterialien sind.

Die Verbindungen der Formel (III):

Es handelt sich hierbei um bekannte Verbindungen. Geeignete Vertreter sind beispielsweise der Di-(2,2-bisbrommethyl-3-hydroxy-n-propyl)-ether(Formel III: Y = Br, m = 2) und insbesondere das 2,2-Bis-(brommethyl)-1,3-propandiol (Formel III: Y = Br, m = 1). Weitere geeignete Vertreter sind in der EP-A 0 348 350 beschrieben.
Bevorzugt ist es, wenn in Formel (III) Y für Br steht und m = 1 ist. Y kann jedoch auch für Cl oder J stehen, und m kann auch die Werte 2 oder 3 annehmen.

Die Diole der Formel (I)

Die Struktur dieser Verbindungen wird durch die Art der eingesetzten Ausgangsverbindungen der Formeln (II) und (III) bestimmt. Besonders bevorzugte Vertreter der Verbindungen (I) wurden oben bereits erwähnt; weitere geeignete Beispiele gehen aus der EP-A 0 348 350 hervor.
Wie bereits erwähnt, wird als Verbindung (II) im Normalfall ein Gemisch von Verbindungen eingesetzt, die alle unter Formel (II) fallen. Damit liegt auch die Verbindung (I) (Diol) normalerweise als ein Gemisch vor. Außerdem wird die Verbindung (I), wie unten bei der Verfahrensbeschreibung näher erläutert, in einer bevorzugten Ausführungsform nicht isoliert, sondern die nachfolgenden Verfahrensschritte werden mit den Produkten durchgeführt, die nach dem ersten Verfahrensschritt erhalten werden. Damit liegt die Verbindung (I) bzw. ein Gemisch von Verbindungen der Formel (I) normalerweise zusammen mit Nebenprodukten vor, die bei ihrer Herstellung anfallen.

Die Di- und Polyisocyanate

Die Verbindungen der Formel (I) werden in Verfahrensschritt a) mit einem Diisocyanat, einem Polyisocyanat oder einem Gemisch von Diisocyanat und Polyisocyanat umgesetzt. Unter Polyisocyanaten sind hierbei Verbindungen mit mehr als 2 -NCO-Gruppen pro Molekül zu verstehen. Wie aus den Patentansprüchen 1 und 4 hervorgeht, kann diese Umsetzung als einstufiger Schritt durchgeführt werden, an den sich der Schritt b) anschließt oder als zweistufiger Schritt (Patentanspruch 4). Sowohl beim einstufigen als auch beim zweistufigen Schritt kann zusammen mit Di- und/oder Polyisocyanat ein mindestens 2 Hydroxylgruppen aufweisendes Kettenverlängerungsmittel mitverwendet werden. Die Umsetzung von Verbindungen der Formel (I) kann mit einem einzigen Diisocyanat, einem Gemisch von mehreren Diisocyanaten, einem oder mehreren Polyisocyanaten oder einem Gemisch von Di- und Polyisocyanat(en) durchgeführt werden und führt zu Oligo- oder Polyurethanen, die gegebenenfalls noch Einheiten enthalten, die aus dem Kettenverlängerungsmittel stammen.
Für den unten näher beschriebenen zweistufigen Verfahrensschritt (Anspruch 4) können in der ersten Stufe die gleichen Isocyanate verwendet werden wie in der zweiten Stufe; es können aber auch für die erste Stufe andere Isocyanate eingesetzt werden als für die zweite.
Beispiele für geeignete Di- bzw. Polyisocyanate sind in der EP-A 0 325 918 und EP-A 0 348 350 beschrieben. Als Di- und/oder Polyisocyanate für die Umsetzung kommen in Betracht sowohl aliphatische und alicyclische, als auch aromatische Di-, Tri- und Polyisocyanate. Bevorzugt sind Diisocyanate der allgemeinen Formel (IV)

$A(NCO)_2$ (IV),

da mit drei- oder mehrwertigen Isocyanaten manchmal unlösliche, unbrauchbare Produkte erhalten werden. A stellt hierbei einen zweiwertigen, ggf. substitulerten, aliphatischen, alicyclischen oder aromatischen Rest dar.

Als Diisocyanate der allgemeinen Formel IV können aliphatische mit einer Alkylenkette von 2 bis 16 C-Atomen, alicyclische mit 6 bis 15 C-Atomen im Ring und aromatische, gegebenenfalls substituierte, z.B. durch Alkylreste oder Alkoxyreste mit 1 bis 4 C-Atomen, Halogen- oder Nitrogruppen substituierte, Phenylen- oder Naphtylen-Diisocyanate eingesetzt werden. A kann aber auch den Rest

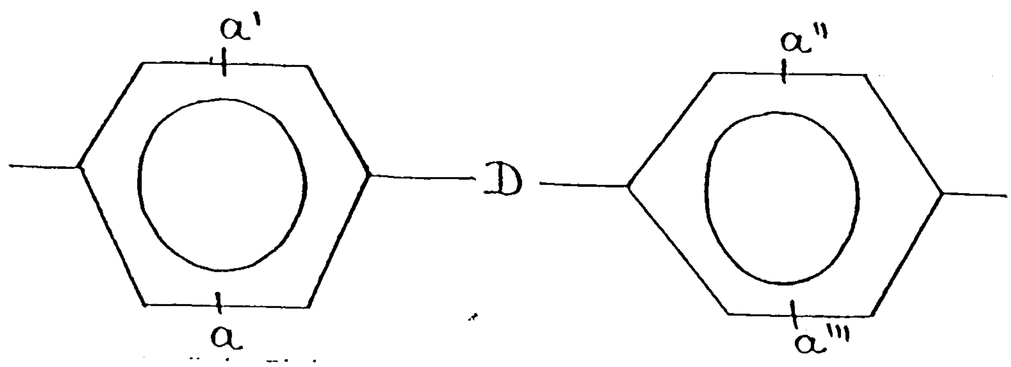

bedeuten, wobei D eine direkte Bindung, eine Sauerstoff-, Methylen- oder Ethylenbrücke ist und a, a', a'', und a''' unabhängig voneinander Wasserstoff, Alkyl oder Alkoxyreste mit 1 bis 4 C-Atomen, Chlor oder Brom bedeuten.

Für die Umsetzung gemäß Verfahrensschritt a) haben sich als Isocyanate der Formel IV das Hexamethylendiisocyanat und das Trimethylhexamethylendiisocyanat (Isomerengemisch aus Produkten, In welchen die Stellung der 3 Methylgruppen unterschiedlich ist) besonders bewährt.

Falls Verfahrensschritt a) In zwei Stufen (wie in Patentanspruch 4 angegeben) durchgeführt wird, besteht eine bevorzugte Ausführungsform darin, die Verbindung der Formel (I) zuerst in einem Lösungsmittel mit einem aliphatischen Diisocyanat zu einem Oligourethan (Präpolymeren) umzusetzen, das noch freie Hydroxyl- oder Isocyanatgruppen aufweist und dann das Präpolymere mit einem alicyclischen Diisocyanat und/oder mit einem mindestens 2 Hydroxylgruppen aufweisenden Kettenverlängerungsmittel zu einem Polyurethan umzusetzen. Falls das Präpolymere freie Hydroxylgruppen aufweist, kann die zweite Stufe mit Diisocyanat alleine durchgeführt werden, es kann aber auch Kettenverlängerungsmittel zusätzlich verwendet werden. Falls das Präpolymere dagegen freie Isocyanatgruppen aufweist, muß das Kettenverlängerungsmittel anwesend sein; es kann zusätzlich Diisocyanat, vorzugsweise ein alicyclisches Diisocyanat, insbesondere mit 6 - 15 C-Atomen im Ring verwendet werden.
Als aliphatische Diisocyanate für die erste Stufe (Herstellung des Oligourethans) sind Hexamethylendiisocyanat oder Trimethylhexamethylendiisocyanat besonders geeignet, als alicyclisches Diisocyanat für die zweite Stufe (Bildung des Polyurethans) ein von einer dimeren ungesättigten Fettsäure abgeleitetes Diisocyanat. Ein Beispiel hierfür ist das Handelsprodukt "DDI 1410 Diisocyanat®" (Henkel Corp.)
Die in den vorangegangenen Absätzen beschriebenen Di-, Tri- und Polyisocyanate sind selbstverständlich auch dann gut zur Herstellung erfindungsgemäßer Copolymerer geeignet, wenn man das Diol der Formel (I) nicht nach dem verbesserten Verfahren (gemäß Anspruch 2) herstellt, sondern nach einem anderen Verfahren, z.B. nach dem in der EP-A 0 348 350 beschriebenen Verfahren.

Das Kettenverlängerungsmittel

Es kann von Vorteil sein, bei Schritt a) des Verfahrens (Umsetzung mit Di- oder Polyisocyanat) ein Kettenverlängerungsmittel zusätzlich zu verwenden. Dies gilt sowohl dann, wenn Schritt a) einstufig, als auch wenn er (siehe Anspruch 4) zweistufig durchgeführt wird. Im letzteren Fall wird das Kettenverlängerungsmittel vorzugsweise während der Umsetzung zum Polyurethan, d.h. in der zweiten Stufe, verwendet. Ein beim Verfahrensschritt a) verwendbares Kettenverlängerungsmittel enthält mindestens zwei Hydroxylgruppen, die mit Isocyanatgruppen reagieren, wodurch das Kettenverlängerungsmittel in die Polyurethankette eingebaut wird.

Die Verwendung eines Kettenverlängerungsmittels ist in gewissen Fällen deshalb von Vorteil, weil die direkte Umsetzung von Hydroxylgruppen enthaltenden Präpolymeren mit Isocyanaten in der 2. Stufe von Verfahrensschritt a) zu in allen herkömmlichen Lösungsmitteln unlöslichen und schwierig zu handhabenden Perfluoralkylreste enthaltenden Polyurethanen führen kann. Es ist deshalb zweckmäßig, aus der Polyurethanchemie bekannte Kettenverlängerungsmittel zusammen mit den Isocyanaten einzusetzen. Als solche Kettenverlängerungsmittel kommen vor allem Polyole in Betracht, Insbesondere Kettenverlängerungsmittel mit 2 Hydroxylgruppen. Verwendbar sind z.B. die in der EP-A 348 350 genannten Kettenverlängerungsmittel. Gut geeignet sind Alkandiole mit 2 bis 16 C-Atomen, deren Alkylenrest durch 1 bis 3 Sauerstoffbrücken unterbrochen sein kann, wie das Ethylen- und Propylenglykol, das 1,4-Butandiol und die entsprechenden höheren Homologen, aber auch das Di-, Tri- und Tetraethylenglykol, der Bis(4-hydroxybutyl)ether und der Bis-hydroxyethylthioether. Besondere Bedeutung kommt solchen Diolen zu, die mindestens 1 tertiäres Stickstoffatom eingebaut enthalten. Hierunter sind Alkandiole zu verstehen, deren Alkylenrest durch 1 bis 3 -N(R')-Brückenglieder unterbrochen ist, wobei R' einen Alkylrest mit 1 bis 18 C-Atomen, den Cyclohexyl- Tolyl-, Naphthyl-, Xylyl- oder Pyridylrest bedeutet. Stelivertretend genannt seien das N-Methyl-, N-Butyl-, N-Oleyl-, N-Cyclohexyl-diethanolamin und die entsprechenden Dipropylamine, das N,N-Dihydroxyethylanilin und das N,N'-Bis-hydroxypropylethylendiamin. Genereil gilt für die einsetzbaren Diole, also auch für solche, in denen der Alkylenrest durch 1 bis 3-N(R')-Brückenglieder unterbrochen ist, daß auch deren Alkoxylierungsprodukte bzw. Polyalkoxylierungsprodukte eingesetzt werden können, wie z.B. mit Polyethylenglykol mit einem Molgewicht von 200 bis etwa 4000 ethoxylierte Produkte, oder auch ethoxyliertes Butyldiethanolamin und propoxyliertes Methyldiethanolamin (Molgewicht 2000). Besonders bewährt haben sich das N-Methyldiethanol- und das N-Butyldiethanolamin.

Vor allem für den Fall, daß in der ersten Stufe von Verfahrensschritt a) (siehe Anspruch 4) mit einem Überschuß an Diisocyanat gearbeitet wird, so daß Präpolymere mit freien Isocyanatgruppen entstehen, werden diese in der zweiten Stufe von Schritt a) mit einem der beschriebenen, mindestens 2 Hydroxylgruppen enthaltendem Kettenverlängerungsmittel umgesetzt. Die hier beschriebenen Kettenverlängerungsmittel können auch eingesetzt werden, wenn das Diol der Formel (I) nicht nach dem verbesserten Verfahren gemäß Anspruch 2 hergestellt wurde, sondern nach einem anderen Verfahren, z.B. dem in der EP-A 0 348 350 beschriebenen Verfahren.

Das verbesserte Verfahren zur Herstellung der Diole der Formel (I) (Patentanspruch 2):

Im ersten Verfahrensschritt wird eine oben beschriebene Verbindung der Formel (II) mit einer Verbindung der Formel (III) umgesetzt, wobei unter Abspaltung von Halogenwasserstoff eine Verbindung (Diol) der Formel (I) entsteht. Die Umsetzung wird in Gegenwart einer wäßrigen Lösung eines Alkalicarbonats in einem in Wasser im wesentlichen unlöslichen aprotischen organischen Lösungsmittel durchgeführt. Das Alkalicarbonat dient zum Abfangen des gebildeten Halogenwasserstoffs und ist daher - in Form einer wäßrigen Lösung - in einer Menge anwesend, die zur im wesentlichen vollständigen Neutralisation der entstehenden Säure HY ausreicht, bevorzugt sogar in geringem Überschuß. Die Umsetzung gemäß erstem Verfahrensschritt wird vorzugsweise bei erhöhter Temperatur, d.h. bei einer Temperatur von mindestens 80 °C, insbesondere im Bereich von 90 bis 140 °C, durchgeführt. Der optimale Temperaturbereich liegt bei 100 bis 120 °C. Es hat sich bewährt, die Reaktion in Gegenwart geringer Mengen an bekannten Phasentransferkatalysatoren bzw. Phasengrenzflächenkatalysatoren durchzuführen. Hierbei wird quaternären Ammoniumverbindungen der Vorzug gegeben.

Als Alkalicarbonat, das in Form einer wäßrigen, vorzugsweise konzentrierten Lösung zugesetzt wird, ist vor allem Kaliumcarbonat geeignet.

Die Verbindungen der Formel II werden in einer solchen Menge eingesetzt, daß die Menge an aktiven Wasserstoffatomen in den Verbindungen II der Menge an abspaltbaren Haloganatomen der Verbindung III in etwa äquivalent ist, d.h. je Mol-Äquivalent Y der Verbindung (III) wird ca. 1 Mol der Verbindung (II) eingesetzt. Überraschenderweise hat sich gezeigt, daß die Reaktion gemäß erstem Verfahrensschritt sehr viel schneller verläuft und damit das Verfahren sehr viel wirtschaftlicher gestaltet werden kann, wenn man in dieser Stufe als Lösungsmittel für die Verbindungen der Formel II und die Verbindungen der Formel III ein

in Wasser im wesentlichen unlösliches, aprotisches Lösungsmittel verwendet und das zur Reaktion benötigte Alkalicarbonat, insbesondere Kaliumcarbonat, in Wasser löst, also eine 2-Phasenreaktion flüssig/flüssig durchführt. Diese Reaktion verläuft in einer gegenüber den Angaben der EP-A 0 348 350 wesentlich verkürzten Zeit. Ganz besonders überraschend ist aber, daß die Aufarbeitung der 2-phasigen Reaktionslösung außerordentlich vereinfacht ist. Die Konzentration der verwendeten Alkalicarbonatlösung (insbesondere des Kaliumcarbonats) in Wasser wird dabei zweckmäßigerweise mindestens so hoch gewählt, daß die Dichte der sich bei der Reaktion bildenden wäßrigen Alkalihalogenid-Lösung (insbesondere des Kaliumbromids) nach Beendigung der Reaktion so groß ist, daß sich die wäßrige Phase als untere Phase abscheidet. Die wäßrige Phase scheidet sich in diesem Fall nach beendeter Reaktion schon in der Wärme rasch und vollständig als untere Phase ab und kann leicht abgetrennt werden.

Besondere Bedeutung kommt im Rahmen des ersten Schritts des verbesserten Verfahrens der Auswahl des Lösungsmittels zu. Während nach dem Stande der Technik (EP-A 348 350) allgemein aprotische Lösungsmittel, wie N-Methylpyrrolidon, N,N-Dimethylformamid, Dimethylsulfoxid und ähnliche sowie Ketone, wie Aceton oder andere Dialkylketone in Betracht kommen, müssen die im Rahmen des verbesserten Verfahrens eingesetzten aprotischen Lösungsmittel in Wasser im wesentlichen unlöslich sein. Darüber hinaus dürfen sie in Gegenwart der wäßrigen Alkalicarbonat-Lösungen beim Erhitzen keine Veränderungen der Art erleiden, daß Produkte gebildet werden, die wasserlöslich sind oder die mit den Verbindungen der Formeln II oder III reagieren oder die das entstehende Alkalihalogenid lösen. Aus diesem Grunde scheiden praktisch Ester als Lösungsmittel wegen der Gefahr der Verseifung aus. Schließlich ist es vorteilhaft, wenn das verwendete Lösungsmittel einen Siedepunkt über 90 °C, insbesondere über 1110 °C aufweist. Dies ist deshalb von Bedeutung, da sich beim Erhitzen niedrig siedender Lösungsmittel in Gegenwart der wäßrigen Alkalicarbonat-Lösung relativ niedrig siedende Azeotrope bilden können, was zu einer Verlängerung der Reaktionszeit führt.

Aus dem gleichen Grunde ist es zweckmäßig, aber nicht unbedingt erforderlich, bei der Durchführung des ersten Schritts des verbesserten Verfahrens in einem geschlossenen Gefäß und unter erhöhtem Druck zu arbeiten, da auf diese Weise ohne weiteres bei Temperaturen von 100 °C bis etwa 140 °C gearbeitet und damit eine Beschleunigung der Reaktion erreicht werden kann. Es ist möglich, aber nicht erforderlich, den Druck durch Aufpressen von Inertgasen, z.B. von Stickstoff zu erhöhen, vielmehr stellt sich der Druck je nach dem Siedepunkt des verwendeten Lösungsmittels, der gewünschten Reaktionstemperatur und durch das bei der Reaktion freiwerdende Kohlendioxid von selbst ein; in diesem Fall wird also unter autogenem Druck gearbeitet. Zur Vermeidung unnötig hoher Drücke ist es zweckmäßig, wasserunlösliche, aprotische Lösungsmittel mit einem Siedepunkt über 90 °C, insbesondere über 110 °C, auszuwählen.

Darüber hinaus müssen selbstverständlich die Lösungsmittel die Fähigkeit haben, sowohl die Ausgangsverbindungen der Formeln II und III als auch die Reaktionsprodukte der Formel I (Diole) hinreichend zu lösen.

Unter all diesen genannten Gesichtspunkten haben sich Ketone besonders bewährt. Als solche mit einem Siedepunkt über 90 °C seien das Methyl-n- und -iso-propylketon und das Diethylketon, als solche mit einem Siedepunkt über 110 °C das Ethyl-iso-propyl-, das Methyl-iso-butyl-, das Ethyl-n-propyl-, das Di-isopropylketon sowie die verschiedenen Amylketone genannt. Aus praktischen Gründen wird unter allen genannten Lösungsmitteln dem Methyl-iso-butylketon der Vorzug gegeben.

Bei der Durchführung des verbesserten Verfahrens kann beispielsweise folgendermaßen vorgegangen werden:

Der Reaktionsansatz, der die Verbindungen II und III sowie die konzentrierte wäßrige Alkalicarbonatlösung in den angegebenen Mengenverhältnissen, das Lösungsmittel und gegebenenfalls einen Phasentransfer- bzw. Grenzflächenkatalysator enthält, wird unter Rühren auf 90 - 140 °C, insbesondere 100 - 120 °C, vorzugsweise in einem geschlossenen Reaktionsgefäß aufgeheizt und ca. 3 bis 8 Stunden bei dieser Temperatur belassen, wobei sich beim Arbeiten in einem geschlossenen Gefäß ein autogener Druck von ca. 3 bis 6 bar (absolut) einstellt. Nach Abstellen des Rührers scheidet sich die wäßrige Phase infolge ihres hohen Salzgehaltes als untere Phase rasch ab und kann in einem zweiten Verfahrensschritt schon ohne oder nach nur geringfügiger Abkühlung gut und im wesentlichen vollständig abgetrennt werden.

Aus der organischen Phase, welche als Reaktionsprodukte die perfluoralkylsubstituierten Diole der Formel I enthält, wird das in geringen Mengen noch enthaltene Wasser, gegebenenfalls nach Zusatz von weiterem Lösungsmittel, entfernt, z.B. durch azeotrope Destillation. Die erhaltene Lösung wird bevorzugt direkt, d.h. ohne weitere Aufarbeitung, gegebenenfalls nach Einstellen auf einen gewünschten Feststoffgehalt durch Zusatz von weiterem Lösungsmittel, für die weitere Umsetzung mit dem Di- oder Polyisocyanat verwendet. Die Verbindungen der Formel (I) werden also vorzugsweise nicht isoliert.

Im zweiten Verfahrensschritt kann wegen der Verwendung eines in Wasser im wesentlichen unlöslichen Lösungsmittels für den ersten Schritt nach Beendigung der Umsetzung gemäß erstem Schritt das zweiphasige flüssige System leicht nach bekannten Methoden in eine wäßrige und eine organische Phase getrennt werden. Die organische Phase wird nach Entfernung des Restwassers, was durch azeotrope Destillation, aber auch nach anderen Methoden erfolgen kann, für die Umsetzung mit Di- oder Polyisocyanat weiterverwendet.
Es hat sich als vorteilhaft erwiesen, die Abtrennung der wäßrigen Phase bereits in der Wärme, d.h. bei Temperaturen nur wenige °C-Grade unter dem Siedepunkt des beim ersten Schritt erhaltenen Reaktionsgemisches vorzunehmen, da hierbei Ausscheidungen von Reaktionsprodukten in der organischen Phase vermieden werden können und sich auch aus der wäßrigen Phase kein Alkalihalogenid, wie z.B. Kaliumbromid abscheidet.

Die leichte Abtrennbarkeit der wäßrigen Phase ist gerade im Hinblick auf die Ausführungen in der bereits zitierten EP-A 348 350 besonders überraschend, da hiernach zwar das Arbeiten mit einem wäßrigen System als Möglichkeit angegeben ist, doch die Aufarbeitung solch eines Systems als schwierig bezeichnet wird. Durch die Verwendung eines in Wasser im wesentlichen unlöslichen Lösungsmittels und die bevorzugte Verwendung der Alkalicarbonat-Lösung in einer Konzentration, die die Abtrennung der gebildeten Alkalihalogenid-Lösung als untere Phase erlaubt, werden bei dem verbesserten Verfahren diese Schwierigkeiten umgangen.

Die Umsetzung mit Di- oder Polyisocyanat

Dieser Verfahrensschritt kann, wie bereits erwähnt, ein einstufiger Schritt sein oder ein zweistufiger, wie er in Patentanspruch 4 angegeben ist. Bei der einstufigen Variante wird die Lösung der Verbindung (I), wie sie nach dem zweiten Verfahrensschritt erhalten wurde, mit einem Di- oder Polyisocyanat der oben beschriebenen Art zu einem Oligo- oder Polyurethan umgesetzt. Dieses wird für die Umsetzung mit Polysiloxan gemaß Schritt b) verwendet. Bei der zweistufigen Variante gemäß Anspruch 4 erfolgt zunächst eine Umsetzung der Verbindung I mit einem Di- oder Polyisocyanat, vorzugsweise Diisocyanat, zu einem Oligourethan (Präpolymeren), das dann in der zweiten Stufe mit Di- oder Polyisocyanat zu einem Polyurethan umgesetzt wird. Sowohl die einstufige als auch die zweistufige Variante können unter Mitverwendung eines Kettenverlängerungsmittels durchgeführt werden. Falls bei der zweistufigen Variante in der ersten Stufe ein Präpolymer mit freien Isocyanatgruppen hergestellt wird, muß in der zweiten Stufe ein - mindestens 2 Hydroxylgruppen enthaltendes - Kettenverlängerungsmittel zugesetzt werden. Es kann in diesem Fall ein Di- oder Polyisocyanat in der zweiten Stufe mitverwendet werden. Enthält das Präpolymere dagegen freie Hydroxylgruppen, wird in der zweiten Stufe immer ein Di- oder Polyisocyanat verwendet und es kann zusätzlich ein Kettenverlängerungsmittel eingesetzt werden. Die Umsetzung mit Di- oder Polyisocyanat wird in einem Lösungsmittel durchgeführt, vorzugsweise in dem gleichen, das für den ersten Schritt bei der Herstellung des Diols der Formel (I) verwendet wurde, da nach dem zweiten Schritt ohnehin eine Lösung der Verbindung (I) in diesem Lösungsmittel vorliegt. Falls die Umsetzung mit Di- oder Polyisocyanat zweistufig ausgeführt wird, verwendet man bevorzugt für beide Stufen wiederum das gleiche Lösungsmittel.

Die einstufige Variante der Umsetzung mit Di- oder Polyisocyanat

Die Umsetzung der Verbindung (I) mit Di- oder Polyisocyanat in einem Lösungsmittel muß so durchgeführt werden, daß Oligo- oder Polyurethane erhalten werden, welche noch freie Hydroxylgruppen oder freie Isocyanatgruppen aufweisen. Dies läßt sich erreichen, indem man das Di- oder Polyisocyanat in solchen Mengen verwendet, daß ein zahlenmäßiger Überschuß oder Unterschuß an -NCO-Gruppen gegenüber den Hydroxylgruppen des Diols (Verbindung (I)) vorliegt. Vorzugsweise bemißt man die Mengen so, daß das Mengenverhältnis von Diol zu Di- oder Polyisocyanat für die Umsetzung gemäß Verfahrensschritt a) so gewählt wird, daß das Verhältnis der Anzahl der OH-Gruppen des Diols zur Anzahl der -NCO-Gruppen des Isocyanats 2 : 3 bis 14:15 oder 15 : 14 bis 3 : 2 beträgt. Die freien Hydroxyl- bzw. Isocyanatgruppen des Oligo- oder Polyurethans sind für die nachfolgende Umsetzung (Schritt b)) mit dem Polysiloxan erforderlich.
Geeignete Verfahrensbedingungen für die einstufige Variante sind dem Fachmann bekannt und gehen aus der EP-A 0 325 918 hervor. Die dort für den Fall anderer Diole genannten Verfahrensbedingungen sind auch für das zu erfindungsgemäßen Copolymeren führende Verfahren geeignet.

Die zweistufige Variante der Umsetzung mit Di- oder Polyisocyanat:

In der ersten Stufe werden Oligourethane (Präpolymere) hergestellt, die noch freie Hydroxyl- oder

Isocyanatgruppen enthalten. Hierzu kann folgendermaßen vorgegangen werden:
Zur Umsetzung in der ersten Reaktionsstufe wird die nach dem ersten Verfahrensschritt erhaltene und ggf. durch Zusatz von Lösungsmittel auf einen gewünschten Feststoffgehalt eingestellte Lösung, die die perfluoralkylsubstituierten Diole der Formel I enthält, mit der gewünschten Menge an Isocyanat, vorzugsweise mit einem der Formel IV versetzt. Es ist ratsam, die Reaktion unter Inertbedingungen durchzuführen und durch Zugabe von aus der Urethanchemie bekannten Katalysatoren, wie sie in der genannten EP-A 348 350 im einzelnen aufgezählt sind, bei erhöhter Temperatur, d.h. bei etwa 60 bis 80°C, in Gang zu bringen bzw. zu beschleunigen. Im Rahmen des zu erfindungsgemäßen Copolymeren führenden Verfahrens hat sich als Katalysator eine Kombination aus organischen Zinnverbindungen unter Zusatz von tertiären Aminen besonders bewährt. Die Reaktion selbst macht sich deutlich durch Ansteigen der Temperatur bemerkbar. Nach Abklingen der Reaktion wird noch für ca. 1/2 bis 1 Stunde bei erhöhter Temperatur nachgerührt.
Die Menge an Isocyanat wird so bemessen, daß bei dieser ersten Reaktionsstufe Präpolymere entstehen, die noch freie Hydroxylgruppen bzw. freie Isocyanatgruppen enthalten, d.h., daß das Isocyanat im Unterschuß bzw. Überschuß angewandt wird. Entweder werden mittels Verwendung eines Unterschusses an Isocyanatgruppen gegenüber den Hydroxylgruppen der Diole der Formel I Präpolymere mit freien Hydroxylgruppen hergestellt. Hierfür hat es sich als zweckmäßig erwiesen, bezogen auf 1 Mol Diioscyanat (z.B. der Formel IV) 1,1 bis 1,6 Mol, insbesondere 1,2 bis1,4 Mol an Verbindungen der Formel I einzusetzen; das bedeutet, daß die nach der ersten Reaktionsstufe in Form von Lösungen vorliegenden Präpolymeren 0,2 bis 1,2, insbesondere 0,4 bis 0,8 Hydroxyläquivalente je Mol Umsetzungsprodukt aus den Verbindungen I mit den Verbindungen IV aufweisen.

Entsprechende Überlegungen gelten umgekehrt, wenn Präpolymere, die noch freie Isocyanatgruppen enthalten, hergestellt werden sollen; in diesem Fall werden die Lösungen, in denen die perfluoralkylsubstituierten Diole der Formel I enthalten sind, mit einem Überschuß an Isocyanatgruppen umgesetzt.
So wie nach dem ersten Verfahrensschritt die Zwischenprodukte der Formel I nicht isoliert werden müssen, ist es ebenfalls nicht erforderlich, die in Form von Lösungen vorliegenden Präpolymeren, die in der ersten Reaktionsstufe der zweistufigen Umsetzung mit Isocyanat entstehen, vor der Durchführung der zweiten Reaktionsstufe zu isolieren; d.h. diese Lösungen können direkt für die weitere Umsetzung in der zweiten Reaktionsstufe eingesetzt werden; es ist in der Regel noch nicht einmal erforderlich, die Lösungen, die von der Umsetzung in der ersten Stufe noch eine erhöhte Temperatur aufweisen, vor der weiteren Reaktion der zweiten Stufe abzukühlen.
In diese Lösungen werden zur Durchführung der 2. Stufe die erforderliche Menge an Isocyanat und/oder Hydroxylgruppen enthaltendem Kettenverlängerungsmittel, zweckmäßig mit Lösungsmittel verdünnt, eingerührt. Die Reaktionsmischung der zweiten Stufe wird so lange bei erhöhter Temperatur, z.B. ca. 60° bis 90°C, belassen, bis die Umsetzung beendet ist, was über Bestimmung von -NCO- bzw. OH-Gruppen verfolgt werden kann. Im übrigen ist es für den Fachmann kein Problem, geeignete Bedingungen für die Durchführung der ersten und zweiten Stufe, z.B. unter Zuhilfenahme der Angaben der EP-A 0 325 918, zu ermitteln.
Die Umsetzungen der ersten Stufe und der zweiten Stufe müssen in solchen Mengenverhältnissen erfolgen, daß sowohl das in der ersten Stufe hergestellte Oligourethan (Präpolymer) als auch das in der zweiten Stufe hergestellte Polyurethan noch freie Hydroxyl- oder freie Isocyanatgruppen aufweisen. Dies geschieht durch Einsatz entsprechender Mengen an Diol (Verbindung (I)), Di- bzw. Polyiisocyanat und/oder Kettenverlängerungsmittel. Die Art der freien Gruppen bei Präpolymer und Polyurethan kann, muß jedoch nicht die gleiche sein; es kann also eines der beiden Produkte freie Hydroxylgruppen aufweisen und das andere freie Isocyanatgruppen.
Für die Mengenverhältnisse von Menge an Verbindung (I) zur Gesamtmenge an in beiden Stufen von Schritt a) eingesetztem Isocyanat gilt die gleiche Aussage, wie sie oben für das einstufige Verfahren gemacht wurde, nämlich, daß es bevorzugt ist, wenn das Verhältnis der Anzahl der OH-Gruppen des Diols zur Anzahl der NCO-Gruppen aller in der ersten ud zweiten Stufe insgesamt eingesetzten Isocyanate 2 : 3 bis 14 : 15 oder 15 : 14 bis 3 : 2 beträgt.

Die erfindungsgemäßen Copolymeren eignen sich gut für die Behandlung von Fasermaterialien. Den Fasermaterialien werden durch diese Copolymeren ein angenehm weicher Griff sowie wasser- und ölabweisende Eigenschaften verliehen. Als Fasermaterialien kommen vor allem textile Flächengebilde wie Gewebe oder Gewirke, aber auch non-wovens (Vliese) in Betracht.
Obwohl prinzipiell die erfindungsgemäßen Copolymeren auch als Lösung in einem organischen Lösungsmittel auf die Fasermaterialien aufgebracht werden können, verwendet man sie aus Umwelt- und Kostengründen vorzugsweise in Form einer wäßrigen Dispersion. Die Copolymeren lassen sich in stabile wäßrige Dispersionen überführen, wozu im Normalfall ein Dispergator erforderlich ist. Geeignete Dispergatoren sind unter anderem solche, wie sie in der EP-A 0 325 918 zur Dispergierung der gemäß dieser Schrift

hergestellten Polymeren mit Urethan- und Siloxaneinheiten beschrieben sind. Die in dieser Schrift genannten Bedingungen für die Dispergierung können auf die Dispergierung der erfindungsgemäßen Copolymeren übertragen werden.
Bevorzugt verwendet man für die Dispergierung der erfindungsgemäßen Copolymeren kationische Dispergatoren, z.B. N-Monoalkyl-, N,N-Dialkyl- oder N,N,N-Trialkyl-ammoniumsalze, in denen an das Stickstoffatom noch eine oder zwei Polyoxyethylengruppe(n) gebunden ist (sind) und in denen das Anion ein Halogenid- oder Carboxylation ist.
Falls gewünscht, können den Dispersionen vor ihrer Anwendung noch weitere Produkte zugesetzt werden, z.B. sogenannte Extender, welche die Effekte der Fluorausrüstung noch weiter erhöhen, oder andere für die Ausrüstung von Fasermaterialien übliche Produkte, wie z.B. Cellulosevernetzer. Die wäßrigen Dispersionen, welche die erfindungsgemäßen Copolymeren enthalten, können nach allgemein üblichen Verfahren auf die Fasermaterialien aufgebracht werden, z.B. mittels eines Foulard-Verfahrens. Anschließend werden die Fasermaterialien nach allgemein bekannten Methoden weiterbehandelt.

Die nach dem oben beschriebenen verbesserten Verfahren hergestellten Copolymeren fallen nach Durchführung von Schritt b) als Lösung in einem organischen Lösungsmittel an. Zur Überführung in wäßrige Dispersionen wird das organische Lösungsmittel entfernt. Dabei ist es zweckmäßig, das Lösungsmittel erst nach der Dispergierung in bekannter Weise, z.B. durch Abdestillieren, vorzugsweise unter vermindertem Druck, zu entfernen. Denn durch die Anwesenheit des Lösungsmittels wird vielfach die Dispergierung erleichtert.

Die Erfindung wird nunmehr durch Ausführungsbeispiele veranschaulicht.

Beispiel 1 (nicht erfindungsgemäßes Vergleichsbeispiel):

Das Beispiel 1 der EP-A 0 325 918 wurde nachgearbeitet, wobei die folgenden Abänderungen vorgenommen wurden:
Anfänglich eingesetzte Menge an (in Butylacetat statt Xylolhexafluorid als Lösungsmittel hergestellter) Perfluoralkyldiollösung: 116,7g (= 0,07 Mol Diol)
Anfänglich eingesetzte Menge an® DDI-1410-Diisocyanat: 24,5 g (= 0,04 Mol)
Anfänglich eingesetzte Menge an Trimethyl-hexamethylendiisocyanat: 8,4 g (= 0,04 Mol)
Anfänglich eingesetzte Menge an Butylacetat: 102,0 g

Nach Zugabe der Katalysatorlösung (siehe EP-A 0 325 918) und 4-stündigem Erhitzen auf 90 °C wurden 10 g Polysiloxan (0,01 Mol, Daten siehe Beispiel 1 der EP-A 0 325 918), 10g Butylacetat und nochmals Katalysatorlösung (analog den Angaben in Beispiel 1 der EP-A 0 325 918) zugegeben.

Nach 4-stündigem Rühren bei 90 °C waren keine -NCO-Gruppen mehr nachzuweisen (IR-Spektrum). Die Dispergierung des entstandenen Produkts wurde nach den Angaben von Beispiel 1 der EP-A 0 325 918 so durchgeführt, daß eine wäßrige Dispersion mit 25 Gew.% Wirkstoff (Fluorgehalt der Dispersion 9,3 Gew.%) erhalten wurde.

Beispiel 2 (erfindungsgemäß)

Es wurde, wie oben unter Beispiel 1 beschrieben, gearbeitet, wobei jedoch an Stelle des dort verwendeten (aus dem Stand der Technik bekannten) Perfluoralkyldiols ein Diol der Formel V (siehe Patentanspruch 13) eingesetzt wurde. Die beiden in diesem Diol enthaltenen Reste $R_f$ wiesen eine Kettenlängenverteilung von 6 bis 16 C-Atomen auf, wobei der Durchschnittswert bei 8 C-Atomen ($R_f$ = hauptsächlich $C_8F_{17}$) lag. Die durchschnittliche Länge der $R_f$-Reste war demnach um 2 C-Atome geringer als bei dem in Beispiel 1 verwendeten Diol.
Das Diol der Formel V wurde gemäß den Angaben von Beispiel 2 der EP-A 0 348 350 hergestellt.

Die eingesetzte Menge an Diol der Formel V betrug (analog zu Beispiel 1) 0,07 Mol (= 84,0 g).

Abweichend von Beispiel 1 wurden 117g (statt 102 g) Butylacetat verwendet. Die Umsetzung mit Polysiloxan wurde bereits nach 2 Stunden beendet, da nach dieser Zeit keine -NCO-Gruppen mehr nachweisbar waren.
Nach Dispergierung wie in Beispiel 1 wurde eine Dispersion mit 25 Gew.% Wirkstoff (8,3 Gew.% Fluor in der Dispersion) erhalten.

Beispiel 3 (nicht erfindungsgemäßes Vergleichsbeispiel)

Beispiel 1 wurde mit folgenden Abänderungen wiederholt:
Anstelle von je 0,04 Mol der Zwei Diisocyanate wurden 0,08 Mol (16,8 g) des gleichen Trimethylhexamethylendiisocyanats eingesetzt wie im Fall von Beispiel 1. Die Menge an Butylacetat betrug 75g statt 102g.
Als Siloxan wurden 40 g (0,01 Mol) eines $\alpha$, $\omega$,-Carbinolfunktionellen Polydimethylsiloxans mit einem Molgewicht von ca. 4.000 eingesetzt. Zusammen mit Siloxan wurden 40 g Butylacetat (statt 10 g) zugegeben. Es wurde eine Dispersion mit 25 Gew.% Wirkstoff (8,8 Gew.% Fluor in der Dispersion) erhalten.

Beispiel 4 (erfindungsgemäß)

Beispiel 3 wurde mit folgenden Abänderungen wiederholt:
An Stelle des Perfluoralkyldiols aus dem Stand der Technik wurde das Diol von Beispiel 2 eingesetzt (84g, 0,07 Mol).
Statt 75 g Butylacetat wurden für den ersten Reaktionsschritt 100,8 g verwendet.
Es wurde eine Dispersion mit 25 Gew.% Wirkstoff (7,2 Gew.% Fluor in der Dispersion) erhalten.

Die Dispersionen gemäß Beispielen 2 und 4, welche erfindungsgemäße Copolymere enthielten, wiesen somit jeweils niedrigere Gehalte an Fluor auf als die Dispersionen, die gemäß den entsprechenden Vergleichsbeispielen 1 bzw. 3 erhalten wurden.

Es wurden 4 Ausrüstungsflotten hergestellt, welche je 30 g/l der Dispersionen 1 bzw. bzw. 3 bzw. 4 enthielten. Zusätzlich enthielten die Ausrüstungsflotten 20 g/l einer Dispersion eines handelsüblichen Cellulosevernetzers (Wirkstoffgehalt: ca. 68 Gew.%) auf Basis von Dimethyloldihydroxyethylenharnstoff/methyloliertes Melamin, 6 g/l einer Lösung eines Erdalkalihalogenids als Vernetzungskatalysator (Wirkstoffgehalt: 50 Gew.%) und 2 g/l 60 %iger Essigsäure.
Mit den so erhaltenen 4 Ausrüstungsflotten wurden vorgewaschene gefärbte Gewebe aus Polyester/Baumwolle (60/40) mittels Foulardierung (60 % Flottenaufnahme) behandelt, bei 110 °C / 10 min. getrocknet und es wurde anschließend bei 150 °C / 5 min kondensiert.
In einer zweiten Versuchsreihe wurde gefärbter Baumwollbatist (100 % Baumwolle) behandelt, wobei folgende Abänderungen gegenüber der ersten Reihe vorgenommen wurden:
30 g/l (statt 20 g) der Dispersion von Cellulosevernetzer
9 g/l (statt 6 g) der Lösung des Katalysators

Flottenaufnahme: 70 %

An den so ausgerüsteten Stoffen wurden die ölabweisende und die wasserabweisende Wirkung beurteilt, und zwar

a) nach Trocknung und Kondensation (wie oben beschrieben) ohne weitere Nachbehandlung,
b) nach zusätzlicher 5 maliger Haushaltswäsche bei 60 °C unter Tensidzusatz
c) ohne Haushaltswäsche, aber nach Simulierung einer chemischen Reinigung mit Perchlorethylen.

Im Fall von b) und c) wurde anschließend vor Durchführung der Tests noch eine Behandlung unter Hitze und Druck vorgenommen (30 sec/160 °C bei Polyester/Baumwolle, 30 sec/190 °C bei 100 % Baumwolle). An anderen Proben aus 100 % Baumwolle (ungefärbt), die entsprechend ausgerüstet waren, wurden eine Beurteilung des Warengriffs sowie eine Bestimmung des Weißgrads (Vergilbung) vorgenommen.

Testmethoden:

Ölabweisende Wirkung: Test nach AATCC (American Association of Textile Chemists and Colorists) 118-1972

Hierbei wird der Ölabweisungsgrad der zu untersuchenden Probe gegenüber 8 verschiedenen flüssigen Kohlenwasserstoffen geprüft und durch einen Wert von 1 bis 8 ausgedrückt (8 = höchste Ölabweisung, d.h. geringste Benetzungstendenz)

Wasserabweisende Wirkung:

Hierzu wurde einerseits der Spraytest gemäß der amerikanischen Methode AATCC 22-1974 angewandt, andererseits der sog. "Bundesmann-Test" (DIN 53 888). Beim Spraytest wird eine Note von 0 bis 100 vergeben, wobei Note 0 für Proben ohne wasserabweisende Wirkung (vollständige Durchnetzung des Gewebes) und Note 100 für optimale Wasserabweisung (Wasser haftet nicht und benetzt nicht, sondern perlt ab) der Gewebeprobe vergeben wird.

Beim Bundesmann-Test wird die Wasseraufnahme der Gewebeprobe in Gew.% bestimmt und der

Abperleffekt visuell ermittelt. Für den Abperleffekt werden Noten von 1 bis 5 vergeben, wobei Note 1 der schlechtesten und Note 5 der besten wasserabweisenden Wirkung zugeordnet ist. In den untenstehenden Tabellen sind für den Spraytest und für den Abperleffekt jeweils 3 Noten aufgeführt. Diese entsprechen 3 zeitlich verschiedenen Beurteilungen an jeweils der gleichen Probe.

Die Griffbeurteilung erfolgte nach den in der EP-A 0 325 918, Seite 8, angegebenen Kriterien. Der Weißgrad wurde an ungefärbter Maschenware aus 100 % Baumwolle mittels der Methode nach Ganz bestimmt, und zwar sowohl an der nur getrockneten (10 min/110 °C) als auch an thermisch nachbehandelten Gewebeproben (5 min/150 °C und 1 min/180 °C). Die Bestimmung des Weißgrades erfolgt nach einer von Ganz entwickelten Formel (vgl. hierzu Publikation "Methoden und Einsatzmöglichkeiten der farbmetrischen Weißbewertung von Textilien" von R. Griesser, Ciba-Geigy-Broschüre Nr. 9140 D (Ausgabe 1981); siehe auch Textilveredlung 18(1983), Nr. 5, Seiten 157 - 162). Für diese Untersuchungen hat sich das "ELREPHO 2000 Spektralphotometer für Remissionsmessungen" von Datacolor bewährt.

Die Versuchsergebnisse gehen aus den nachfolgenden Tabellen I bis III hervor.

Tabelle I: Ergebnisse an vorgewaschenen blau gefärbten Polyester/Baumwolle (PES/CO, 60/40)-Geweben.

Tabelle II: Ergebnisse an blau gefärbtem Batist aus 100 % Baumwolle.

Tabelle III: Ergebnisse an ungefärbter Maschenware aus 100 % Baumwolle.

Die Wiederholung der Versuche ohne Zusatz von Cellulosevernetzer und Vernetzungskatalysator ergab die gleiche relative Abstufung, wie sie aus den Tabellen I bis III hervorgeht, bei geringfügig veränderten Absolutwerten.

Tabelle I

Stoffqualität:
PES/CO (60/40)
Gewebe (blau gefärbt)
vorgewaschen

| Flotte mit Dispersion gemäß Beispiel | | 1 | 2 | 3 | 4 |
|---|---|---|---|---|---|
| Original (nach. Kondensation) | Öl | 5 | 5 | 4 | 5 |
| | Spray | 100 | 100 | 100 | 100 |
| | Bundesmann-Wasseraufnahme | 4 | 4 | 6 | 5 |
| | Abperleffekt | 5/5/5 | 5/5/5 | 5/5/5 | 5/5/5 |
| nach 5x60°C-Wäsche | Öl | 4 | 5 | 4 | 5 |
| | Spray | 100/100/100 | 100/100/100 | 90/90/90 | 100 |
| | Bundesmann-Wasseraufnahme | 9 | 5 | 13 | 10 |
| | Abperleffekt | 4/4/4 | 4/4/4 | 3/2/2 | 4/4/4 |
| nach Chemisch-Reinigung (Perchlorethylen) | Öl | 4 | 5 | 4 | 5 |
| | Spray | 100/100/100 | 100/100/100 | 100/100/100 | 100/100/100 |
| | Bundesmann-Wasseraufnahme (Gew.%) | 10 | 6 | 14 | 6 |
| | Abperleffekt | 4/4/3 | 5/5/5 | 4/4/3 | 5/5/5 |

Stoffqualität:
CO-Batist (100% Baumwolle)
(blau gefärbt)

**Tabelle II**

| Flotte mit Dispersion gemäß Beispiel | | 1 | 2 | 3 | 4 |
|---|---|---|---|---|---|
| Original (nach. Kondensation) | Öl | 5 | 5 | 5 | 5 |
| | Spray | 100/100/100 | 100/100/100 | 100/100/100 | 100/100/100 |
| | Bundesmann-Wasseraufnahme | 7 | 6 | 13 | 8 |
| | Abperleffekt | 5/5/5 | 5/5/5 | 5/5/4 | 5/5/5 |
| nach 5x60°C-Wäsche | Öl | 3 | 4 | 3 | 5 |
| | Spray | 90/90/90 | 100/100/100 | 90/90/90 | 90/90/90 |
| | Bundesmann-Wasseraufnahme | 17 | 10 | 28 | 19 |
| | Abperleffekt | 4/4/3 | 5/4/4 | 4/3/3 | 4/4/4 |
| nach Chemisch-Reinigung (Perchlorethylen) | Öl | 3 | 4 | 3 | 4 |
| | Spray | 100/100/100 | 100/100/100 | 100/100/100 | 100/100/100 |
| | Bundesmann-Wasseraufnahme (Gew.%) | 23 | 15 | 23 | 14 |
| | Abperleffekt | 4/4/3 | 5/4/4 | 5/4/3 | 5/4/4 |

Tabelle III

| Flotte mit Dispersion gemäß Beispiel | 1 | 2 | 3 | 4 | Vergleich (ohne Ausrüstung) |
|---|---|---|---|---|---|
| Griffbeurteilung | 4 | 4 | 6 | 6 | - |
| CO-Maschenware weiß<br>Weißgrad nach Ganz:<br>Temperaturvergilbung:<br>5 Min. 150°C<br>1 Min. 180°C | | | <br>181<br><br>176<br>161 | <br>196<br><br>192<br>177 | <br>228<br><br>213<br>203 |

Bei der Beurteilung des Weißgrads bzw. der Vergilbungstendenz nach Temperaturbehandlung bedeuten höhere Zahlen eine geringere Vergilbung.

Man erkennt, daß trotz geringerer Auflagemenge an Fluor mit erfindungsgemäßen Produkten (Dispersionen 2 und 4) gleiche oder bessere Ergebnisse erzielt werden als mit Produkten aus dem Stand der Technik (Dispersionen 1 und 3).

Im Folgenden wird an Hand von 2 Beispielen das verbesserte Verfahren zur Herstellung von Lösungen der Diole der Formel I veranschaulicht:

Beispiel 5

a) Herstellung eines Diols der Formel I

In einem Rührautoklaven aus Glas von 1,5 Inhalt, ausgestattet mit Mantelheizung, eingeschraubter Thermometerhülse, Belüftungs- und Bodenablaßventil werden nacheinander folgende Komponenten nach Entfernen der Thermometerhülse zusammengegeben:

- 455,2 g = 0,800 mol perfluoriertes Mercaptan
- 106,0 g = 0,404 mol Bis-(brommethyl)-bis-(hydroxymethyl)-methan
- 116,0 g = 0,840 mol Kaliumcarbonat
- 120,0 g Methylisobutylketon
- 160,0 g entmineralisiertes Wasser
- 8,0 g = 0,044 mol Tetraethylammoniumchlorid-monohydrat.

Das verwendete perfluorierte Mercaptan entsprach der allgemeinen Formel $R_f$ - $CH_2$ - $CH_2$ - SH, wobei $R_f$ einen perfluorierten Rest $C_nF_{2n+1}$ darstellt. Es handelte sich hierbei um ein Gemisch von Substanzen, die sich in der Kettenlänge von $R_f$ unterscheiden.

Nach Einschrauben der Thermometerhülse wird das Rührwerk mit 250 U/min. in Betrieb gesetzt und der Autoklaveninhalt auf 60 °C erwärmt, bis alle Feststoffe gelöst sind. Zum Entfernen der Luft wird nun über das Entlüftungsventil auf 300 mbar evakuiert und anschließend durch Einleiten von Stickstoff auf Normaldruck entlastet. Dieser Arbeitsgang wird noch zweimal wiederholt.

Danach wird bei gleicher Rührgeschwindigkeit auf eine Manteltemperatur von 120 °C erhitzt, wobei sich nach 1,5 Stunden eine Innentemperatur von 110 °C und ein Druck von 2,5 bar einstellen. Nach weiteren 6 Stunden unter den gleichen Reaktionsbedingungen ist die Umsetzung beendet.

Nach Abkühlen auf 100 °C wird das Rührwerk ausgeschaltet, wobei sich nach wenigen Minuten zwei

völlig getrennte flüssige Phasen bilden.
Durch das Bodenventil wird zunächst die untere, wässerige Phase entfernt und anschließend die Lösemittelphase, welche das Reaktionsprodukt enthält, in einen Destillationskolben abgelassen.

Eine Probe der Lösemittelphase zeigt bei der gaschromatographischen Analyse einen Umsetzungsgrad von 92% an, das bedeutet, daß 92 % des eingesetzten Mercaptans zu dem gewünschten Diol der Formel I umgesetzt worden sind.

Nun werden zur Lösemittelphase 700 Gramm Methylisobutylketon zugefügt und anschließend zur Entfernung des Restwassers soweit azeotrop ausdestiliert, bis sich eine 50 %-ige Lösung gebildet hat. Ihr Wassergehalt liegt (bestimmt nach Karl Fischer) unter 0,05 %.

b) Herstellung des Copolymeren mit Urethan- und Siloxaneinheiten:

In einem mit Rührer, Rückflußkühler mit Trockenrohr, Stickstoffanschluß und Heizbad ausgestatteten Glaskolben werden 168,0 g (enthaltend 0,07 mol des Diols der Formel I) einer Lösung der Verbindung aus Beispiel 5 a), 16,8 g (0.08 mol) Trimethyl-hexamethylendiisocyanat (Isomerengemisch) und 16,8 g Methylisobutylketon sowie 1,0 g Triethylamin (1 %-ig in Methylisobutylketon, Katalysator) eingewogen. Diese Mischung wird nun auf 90 °C erhitzt und 4 Std. bei dieser Temperatur gehalten. Anschließend werden 40,0 g (0,01 mol) Dimethylpolysiloxan mit Zwei endständigen, an Si gebundenen $-CH_2CH_2CH_2OH$-Gruppen, 40,0 g Methylisobutylketon und 1,0 g Triethylamin (1 %-ig in Methylisobutylketon, Katalysator) zugegeben. Nach dieser Zugabe wird der Kolbeninhalt auf 90 °C erhitzt und solange auf dieser Temperatur gehalten, bis alle N = C = O-Gruppen abreagiert haben (Prüfung mittels IR).

Beispiel 6

In einem mit Rührer, Rückflußkühler mit Trockenrohr, Stickstoffanschluß und Heizbad ausgestatteten Glaskolben werden 168,0 g (enthaltend 0,07 mol des Diols der Formel I) einer Lösung der Verbindung aus Beispiel 5 a, 8,4 g (0,04 mol) Trimethyl-hexamethylendiisocyanat (Isomerengemisch) und 8,4 g Methylisobutylketon sowie 1,0 g Triethylamin (1 %-ig in Methylisobutylketon, Katalysator) eingewogen. Diese Mischung wird nun auf 90 °C erhitzt und solange auf dieser Temperatur gehaften, bis alle N = C = O-Gruppen abreagiert haben (Prüfung mittels IR).
Anschließend werden 24,5g DDI®-1410 Diisocyanat, 40,0g (0,01 mol) des gleichen carbinolfunktionellen Dimethylpolysiloxans wie in Beispiel 5, 64,5 g Methylisobutylketon und 1,0 g Triethylamin (1 %-ig in Methylisobutylketon, Katalysator) zugegeben.
Nach dieser Zugabe wird der Kolbeninhalt wieder auf 90 °C erhitzt und ebenfalls bis zum völligen Abreagieren der N = C = O-Gruppen auf dieser Temperatur gehalten (Prüfung mittels IR).

Das für diese Beispiele verwendete Trimethylhexamethylendiisocyanat war ein Gemisch aus dem 2.2.4- und dem 2.4.4-Isomeren im Verhältnis von etwa 1:1.
Das DDI® -1410-Diisocyanat ist ein Handelsprodukt der Firma Henkel Corp., USA.

Die nach den Beispielen 5 und 6 erhaltenen Reaktionslösungen wurden jeweils mit wäßrigen Lösungen eines Gemisches aus einem Acetat eines Fettaminethoxilats und einem ethoxilierten Ammoniumsalz vermischt und mittels einer Hochdruckdispergiervorrichtung in wäßrige Dispersionen überführt Anschließend wurde das Lösungsmittel als Azeotrop mit Wasser bei vermindertem Druck durch Destillation entfernt.

Die so erhaltenen wäßrigen Dispersionen eignen sich, ggf. nach Einstellung der gewünschten Konzentration, hervorragend zur Behandlung von Fasermaterialien.

**Patentansprüche**

1. Perfluoraliphatische Gruppen enthaltende Copolymere mit Urethan- und Siloxaneinheiten, herstellbar durch folgende Verfahrensschritte

   a) Umsetzung eines Diols der allgemeinen Formel I

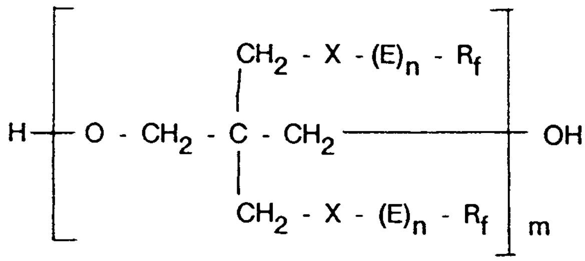 (I)

worin
m = 1,2 oder 3 ist
n = 0 oder 1 ist
die Einheit $-CH_2-X-$ für $-CH_2-S-$, $-CH_2-N(R)-SO_2-$ oder für $-CH_2-N(R)-C(O)-$steht,
worin R für Wasserstoff oder für eine Alkylgruppe mit 1 - 6 C-Atomen steht $R_f$ für einen geradkettigen oder verzweigten Perfluoralkylrest mit 1 bis 18 C-Atomen steht, in dem ggf. ein Fluoratom durch eine Perfluoralkoxygruppe mit 2 bis 6 C-Atomen substituiert sein kann,
worin E ein verzweigter oder geradkettiger Alkylenrest mit 1 bis 10 Kohlenstoffatomen ist, der gegebenenfalls durch 1 bis 3 Gruppen unterbrochen ist, nämlich durch jeweils zweiwertige Brückenglieder der Formeln $-NR-$,$-O-$,$-S-$,$-SO_2-$,$-COO-$,$-OOC-$,$-CONR-$,$-NRCO-$,$-SO_2NR-$ und $-NRSO_2-$, und der gegebenenfalls an einem Ende eine $-SO_2NR-$ oder eine $-CONR-$Gruppe aufweist, wobei der Rest $R_f$ mit dem Schwefelatom oder dem Kohlenstoffatom dieser Gruppe verknüpft ist, wobei R für Wasserstoff oder eine Alkylgruppe mit 1- C-Atomen steht,
wobei das Diol im Gemisch mit Nebenprodukten vorliegen kann, die bei seiner Herstellung anfallen, mit einem Di- oder Polyisocyanat zu einem Oligo- oder Polyurethan, welches freie Hydroxylgruppen oder freie Isocyanatgruppen aufweist, wobei diese Umsetzung gegebenenfalls in Anwesenheit eines mindestens 2 Hydroxylgruppen enthaltenden Kettenverlängerungsmittels durchgeführt wird,
b) Umsetzung eines durch Schritt a) erhältlichen Oligo- oder Polyurethans mit einem Polysiloxan, welches mindestens zwei funktionelle Gruppen enthält, die mit den freien Hydroxylgruppen oder freien Isocyanatgruppen des Oligo- oder Polyurethans reagieren können.

**2.** Copolymere nach Patentanspruch 1, dadurch gekennzeichnet, daß das Diol der allgemeinen Formel I erhalten wurde durch Umsetzung einer Verbindung der allgemeinen Formel (II)

$R_f(E)_n-X-H$ (II)

mit einer Verbindung der allgemeinen Formel (III)

$$HO\ [CH_2-C\,(CH_2Y)_2CH_2O]_m\,H \qquad (III)$$

worin Y für Cl, Br oder J steht und wobei je Mol-Äquivalent Y von Verbindung (III) ca. 1 Mol der Verbindung (II) eingesetzt wird, und wobei $R_f$, E, X, m und n die in Patentanspruch 1 angegebene Bedeutung haben, wobei diese Umsetzung in Gegenwart einer wäßrigen Lösung eines Alkalicarbonats in einer Menge, die zur im wesentlichen vollständigen Neutralisation der entstehenden Säure HY ausreicht, in einem in Wasser im wesentlichen unlöslichen aprotischen organischen Lösungsmittel, gegebenenfalls in Gegenwart eines Phasentransferkatalysators, durchgeführt wird, und Abtrennung der sich abscheidenden wäßrigen Salzlösung und Entfernung des verbleibenden Restwassers aus der organischen Phase.

**3.** Copolymere nach Patentanspruch 2, dadurch gekennzeichnet, daß das Diol der Formel (I) ohne vorhergehende Zwischenisolierung dieser Verbindung (I) in einem Lösungsmittel mit dem Di- und/oder Polyisocyanat umgesetzt wird.

**4.** Copolymere nach einem oder mehreren der Patentansprüche 1 bis 3, dadurch gekennzeichnet, daß die Verbindung der Formel (I) mit Di- oder Polyisocyanat zuerst in einem Lösunsmittel zu einem Oligourethan (Präpolymeren) mit freien Hydroxylgruppen oder freien Isocyanatgruppen umgesetzt wird und daß anschließend ohne Isolierung des entstandenen Oligourethans dieses Oligourethan mit einem Di- oder

Polyisocyanat und/oder mit einem mindestens 2 Hydroxylgruppen enthaltenden Kettenverlängerungsmittel in einem Lösungsmittel zu einem Polyurethan umgesetzt wird, das noch freie Hydroxylgruppen oder freie Isocyanatgruppen aufweist.

**5.** Copolymere nach einem oder mehreren der Patentansprüche 2 bis 4, dadurch gekennzeichnet, daß man die Konzentration des Alkalicarbonats in Wasser mindestens so hoch einstellt, daß die Dichte der sich bei der Reaktion bildenden Alkalihalogenid-Lösung nah Beendigung der Umsetzung von Verbindung (II) mit Verbindung (III) so hoch ist, daß sich die wäßrige Phase als untere Phase abscheidet.

**6.** Copolymere nach einem oder mehreren der Patentanspüche 2 bis 5, dadurch gekennzeichnet, daß man als Alkalicarbonat Kaliumcarbonat einsetzt.

**7.** Copolymere nach einem oder mehreren der Patentansprüche 1 bis 6, dadurch gekennzeichnet, daß für die Umsetzung gemäß Verfahrensschritt a) ein Diisocyanat der Formel (IV)

$A(NCO)_2$ (IV)

eingesetzt wird, worin A für einen, gegebenenfalls substituierten, zweiwertigen aliphatischen, alicyclischen oder aromatischen Rest steht.

**8.** Copolymere nach einem oder mehreren der Patentansprüche 4 bis 7, dadurch gekennzeichnet, daß die Verbindung der Formel (I) zuerst mit einem aliphatischen Diisocyanat zu einem Oligourethan und dieses anschließend mit einem alicyclischen Diisocyanat und/oder mit einem mindestens 2 Hydroxylgruppen enthaltenden Kettenverlängerungsmittel zu einem Polyurethan umgesetzt wird.

**9.** Copolymere nach Patentanspruch 8, dadurch gekennzeichnet, daß als aliphatisches Diisocyanat Hexamethylendiisocyanat oder Trimethylhexamethylendiisocyanat und daß als alicyclisches Diisocyanat ein von einer dimerisierten Fettsäure abgeleitetes Diisocyanat eingesetzt wird.

**10.** Copolymere nach einem oder mehreren der Patentansprüche 2 bis 9, dadurch gekennzeichnet, daß als aprotisches Lösungsmittel Methylisobutylketon verwendet wird.

**11.** Copolymere nach einem oder mehreren der Patentansprüche 2 bis 10, dadurch gekennzeichnet, daß als Verbindung der Formel (III) die Verbindung eingesetzt wird, In der Y = Br und m = 1 ist.

**12.** Copolymere nach einem oder mehreren der Patentansprüche 1 bis 11, dadurch gekennzeichnet, daß im Schritt b) das Oligo- oder Polyurethan mit dem Polysiloxan in solchen Mengenverhältnissen umgesetzt wurde, daß alle freien Hydroxylgruppen oder alle freien Isocyanatgruppen des Oligo- oder Polyurethans umgesetzt wurden.

**13.** Copolymere nach einem oder mehreren der Patentansprüche 1 bis 12, dadurch gekennzeichnet, daß das für die Umsetzung gemäß Verfahrensschritt a) verwendete Diol die Formel (V)

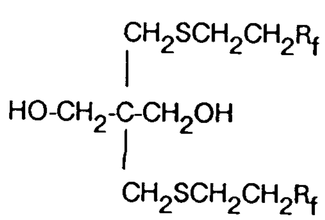

(V)

aufweist, wobei $R_f$ die in Anspruch 1 angegebene Bedeutung besitzt.

**14.** Copolymere nach einem oder mehreren der Patentansprüche 1 bis 13, dadurch gekennzeichnet, daß $R_f$ für einen geradkettigen Perfluoralkylrest steht und daß in 65 bis 90 % aller Moleküle der Copolymeren der Rest $R_f$ 8 bis 10 Kohlenstoffatome enthält.

**15.** Copolymere nach einem oder mehreren der Patentansprüche 1 bis 14, dadurch gekennzeichnet, daß

das Oligo- oder Polyurethan freie Hydroxylgruppen und das Polysiloxan Epoxy- oder Carboxygruppen als funktionelle Gruppen enthält.

**16.** Copolymere nach einem oder mehreren der Patentansprüche 1 bis 14, dadurch gekennzeichnet, daß das Oligo- oder Polyurethan freie Isocyanatgruppen und das Polysiloxan Hydroxyl- oder Amino oder Amidogruppen als funktionelle Gruppen enthält.

**17.** Copolymere nach einem oder mehreren der Patentansprüche 1 bis 16, dadurch gekennzeichnet, daß das Polysiloxan funktionelle Gruppen in $\alpha$- und in $\omega$ -Stellung enthält.

**18.** Copolymere nach einem oder mehreren der Patentansprüche 1 bis 17, dadurch gekennzeichnet, daß als Kettenverlängerungsmittel N-Methyl-diethanolamin eingesetzt wird.

**19.** Copolymere nach einem oder mehreren der Patentansprüche 1 bis 18, dadurch gekennzeichnet, daß das Mengenverhältnis von Diol zu Di- oder Polyisocyanat für die Umsetzung gemäß Verfahrensschritt a) so gewählt wird, daß das Verhältnis der Anzahl der OH-Gruppen des Diols zur Anzahl der -NCO-Gruppen des Isocyanats 2 : 3 bis 14 : 15 oder 15 : 14 bis 3 : 2 beträgt.

**20.** Copolymere nach einem oder mehreren der Patentansprüche 1 bis 19, dadurch gekennzeichnet, daß das verwendete Polysiloxan die allgemeine Formel

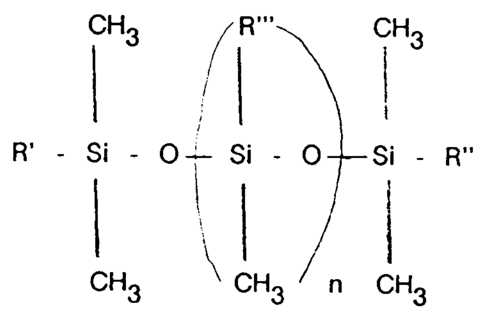

aufweist, worin
n = 5 - 200, vorzugsweise 8 bis 100, ist und worin durchschnittlich mindestens 2 aller anwesenden einzelnen Reste R', R''und R'''für einen Rest stehen, der eine funktionelle Gruppe enthält, die mit einer Hydroxyl- oder einer Isocyanatgruppe reagieren kann und worin alle Reste R', R'', R''', welche keine solche funktionelle Gruppe enthalten, jeweils für einen Methylrest stehen.

**21.** Copolymere nach Patentanspruch 20, dadurch gekennzeichnet, daß alle Reste R''' Methylgruppen sind.

**22.** Verfahren zur Herstellung von perfluoraliphatische Gruppen enthaltenden Copolymeren mit Urethan- und Siloxaneinheiten, gekennzeichnet durch folgende Verfahrensschritte
a) Umsetzung eines Diols der allgemeinen Formel I

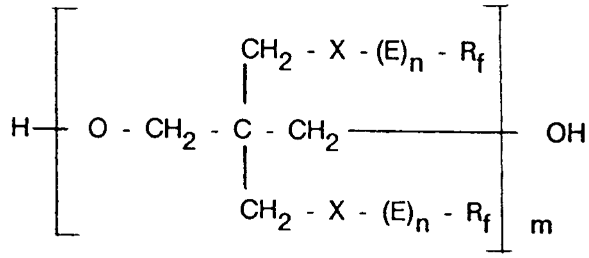 (I)

worin
m = 1, 2 oder 3 ist
n = 0 oder 1 ist

die Einheit $-CH_2-X-$ für $-CH_2-S-$, $-CH_2-N(R)-SO_2-$ oder für $-CH_2-N(R)-C(O)-$steht, worin R für Wasserstoff oder für eine Alkylgruppe mit 1 - 6 C-Atomen steht $R_f$ für einen geradkettigen oder verzweigten Perfluoralkylrest mit 1 bis 18 C-Atomen steht, in dem ggf. ein Fluoratom durch eine Perfluoralkoxygruppe mit 2 bis 6 C-Atomen substituiert sein kann, worin E ein verzweigter oder geradkettiger Alkylenrest mit 1 bis 10 Kohlenstoffatomen ist, der gegebenenfalls durch 1 bis 3 Gruppen unterbrochen ist, nämlich durch jeweils zweiwertige Brückenglieder der Formeln $-NR-$,$-O-$,$-S-$,$-SO_2-$,$COO-$,$OOC-$,$CONR-$,$-NRCO-$,$-SO_2NR-$ und $-NRSO_2-$, und der gegebenenfalls an einem Ende eine $-SO_2NR-$ oder eine -CONR Gruppe aufweist, wobei der Rest $R_f$ mit dem Schwefelatom oder dem Kohlenstoffatom dieser Gruppe verknüpft ist, wobei R für Wasserstoff oder eine Alkylgruppe mit 1 -6 C-Atomen steht, wobei das Diol im Gemisch mit Nebenprodukten vorliegen kann, die bei seiner Herstellung anfallen, mit einem Di- oder Polyisocyanat zu einem Oligo- oder Polyurethan, welches freie Hydroxylgruppen oder freie Isocyanatgruppen aufweist, wobei diese Umsetzung gegebenenfalls in Anwesenheit eines mindestens 2 Hydroxylgruppen enthaltenden Kettenverlängerungsmittels durchgeführt wird,

b) Umsetzung eines durch Schritt a) erhältlichen Oligo- oder Polyurethans mit einem Polysiloxan, welches mindestens zwei funktionelle Gruppen enthält, die mit den freien Hydroxylgruppen oder freien Isocyanatgruppen des Oligo- oder Polyurethans reagieren können.

**23.** Verfahren nach Patentanspruch 22, dadurch gekennzeichnet, daß das Diol der allgemeinen Formel I erhalten wurde durch Umsetzung einer Verbindung der allgemeinen Formel (II)

$R_f-(E)_n-X-H$ (II)

mit einer Verbindung der allgemeinen Formel (III)

$$HO\ [CH_2 - C\ (CH_2Y)_2CH_2O]_m - H \quad (III)$$

worin Y für Cl, Br oder J steht und wobei je Mol-Äquivalent Y von Verbindung (III) ca. 1 Mol der Verbindung (II) eingesetzt wird, und wobei $R_f$, E, X, m und n die in Patentanspruch 1 angegebene Bedeutung haben, wobei diese Umsetzung in Gegenwart einer wäßrigen Lösung eines Alkalicarbonats in einer Menge, die zur im wesentlichen vollständigen Neutralisation der entstehenden Säure HY ausreicht, in einem in Wasser im wesentlichen unlöslichen aprotischen organischen Lösungsmittel, gegebenenfalls in Gegenwart eines Phasentransferkatalysators, durchgeführt wird, und Abtrennung der sich abscheidenden wäßrigen Salzlösung und Entfernung des verbleibenden Restwassers aus der organischen Phase.

**24.** Wäßrige Dispersion, welche ein Copolymeres nach einem oder mehreren der Ansprüche 1 bis 21 und ggf. einen Dispergator, vorzugsweise einen kationischen Dispergator, enthält.

**25.** Verwendung einer Dispersion nach Anspruch 24 zur Behandlung von Fasermaterialien.